# EUROPÄISCHE PATENTSCHRIFT

(11) **EP 2 611 647 B1**
(45) Veröffentlichungstag und Bekanntmachung des Hinweises auf die Patenterteilung: **12.07.2017**
(21) Anmeldenummer: 11752119.5
(22) Anmeldetag: 27.08.2011
(51) Int. Cl.: B60N 2/02, B60N 2/225, F16H 37/06

(54) **VERSTELLANTRIEB FÜR VERSTELLEINRICHTUNGEN EINES KRAFTFAHRZEUGSITZES**
ADJUSTMENT DRIVE FOR ADJUSTMENT DEVICES OF A MOTOR VEHICLE SEAT
COMMANDE DE RÉGLAGE POUR DES DISPOSITIFS DE RÉGLAGE D'UN SIÈGE DE VÉHICULE AUTOMOBILE

(30) Priorität: 03.05.2011 DE 102011075183; 31.08.2010 DE 102010040048
(43) Veröffentlichungstag der Anmeldung: 10.07.2013
(73) Patentinhaber: Brose Fahrzeugteile GmbH & Co. Kommanditgesellschaft, Coburg, Max-Brose-Straße 1 96450 Coburg (DE)
(72) Erfinder: ANDRES, Christian, 36466 Wiesenthal (DE); KRÖNER, Gregor, 96120 Bischberg (DE); MÜNEKHOFF, Bernd, 96237 Ebersdorf (DE)
(74) Vertreter: Maikowski & Ninnemann Patentanwälte Partnerschaft mbB
(86) Internationale Anmeldenummer: PCT/EP2011/004313
(87) Internationale Veröffentlichungsnummer: WO 2012/028283

(56) Entgegenhaltungen:
- DE-A1- 4 127 051
- DE-A1-102004 040 602
- US-A1- 2006 117 890

## Beschreibung

Die Erfindung betrifft einen Verstellantrieb für Verstelleinrichtungen eines Kraftfahrzeugsitzes gemäß dem Oberbegriff des Anspruchs 1.

Aus der DE 10 2004 040 602 A1 ist ein Stellantrieb für eine elektrische Sitzverstellung eines Kraftfahrzeugsitzes bekannt, der einen Antriebsmotor und ein zweistufiges, selbsthemmendes Untersetzungsgetriebe umfasst, das eine schnelle Antriebsdrehbewegung des Antriebsmotors in eine untersetzte, langsame Drehbewegung eines Abtriebsrades umwandelt. Das Untersetzungsgetriebe weist ein Gehäuse mit einem an den Antriebsmotor angeflanschten Unterteil, eine Zwischenplatte mit einer Radialnut und ein Deckelteil, das unter Zwischenlage der Zwischenplatte mittels Schrauben mit dem Unterteil verschraubt ist, auf. Die erste, selbsthemmende Untersetzungsstufe des Untersetzungsgetriebes wird durch einen Schneckenantrieb gebildet, der eine mit der Drehachse des Antriebsmotors verbundene Antriebsschnecke enthält, die in eine Stirnverzahnung eines Stirnrades eingreift. Mit dem Stirnrad ist ein Exzenter eines die zweite Untersetzungsstufe ausbildenden Exzentergetriebes verbunden, das ein Taumelrad, das mit dem Taumelrad über eine Verzahnung zusammenwirkende Abtriebsrad und eine Führungseinrichtung für das Taumelrad aufweist, das mittels der Führungseinrichtung drehfest gehalten und zur Ausführung einer Taumelbewegung auf einer Kreisbahn freigegeben ist. Die Führungseinrichtung umfasst einen an das Taumelrad angeformten Führungsarm, der in der Radialnut der Zwischenplatte in einer bezogen auf die Kreisbahn radialen Richtung verschieblich und drehfest gehalten ist.

Bei dem aus mehreren axial hintereinander angeordneten Getriebeelementen der ersten und zweiten Untersetzungsstufe des Untersetzungsgetriebes sowie bei der radialen Führung des Taumelrades besteht die Gefahr, dass insbesondere bei hoher Belastung die Verzahnungen außer Eingriff kommen können, was nicht nur eine Funktionsunfähigkeit des Stellantriebes, sondern vor allem im Crashfall eine erhebliche Verletzungsgefahr für die Kraftfahrzeuginsassen bedeutet.

Alternativ zu einer radialen Führung des Taumelrades ist es aus der DE 41 27 051 A1 bei einem als Taumel- oder Umlaufrädergetriebe ausgebildetes Untersetzungsgetriebe mit einem mit einer Abtriebswelle verbunden, innen verzahnten Hohlrad, und einem Planetenrad, dessen Außenverzahnung teilweise in Eingriff mit der Innenverzahnung des Hohlrades ist, bekannt, einen Kreuzschlitzschieber zur horizontalen und vertikalen Führung des Planetenrades einzusetzen, der ein vertikal ausgerichtetes Langloch aufweist, das an den Enden in vertikale Schlitze übergeht, in die diametral zueinander auf der Stirnseite des Taumelrades angeordnete Zapfen eingreifen. In horizontalen Schenkeln des Kreuzschlitzschiebers sind zwei miteinander fluchtende horizontale Langlöcher vorgesehen, in die feststehend mit einem Gehäusedeckel verbundene Zapfen eintauchen.

Ein alternatives Exzentergetriebe für den Getriebebeschlag eines Fahrzeugsitzes ist aus der EP 1 647 438 B1 bekannt, bei dem auf einem mit einem Mitnehmer verbundenen Exzenter gleitend ein Planetenrad mit zwei konzentrischen Außenverzahnungen mit unterschiedlichen Kopfkreisdurchmesser angeordnet ist, von denen die erste Außenverzahnung mit der Innenverzahnung eines gestellseitigen Hohlrades und die zweite Außenverzahnung mit der Innenverzahnung eines abtriebsseitigen Hohlrades kämmt. Da sich die Anzahl der Zähne des Planetenrades von denen der Hohlräder um wenigstens einen Zahn unterscheidet und der jeweilige Außendurchmesser der Außenverzahnung des Planetenrades um wenigstens eine Zahnhöhe geringer ist als der Innendurchmesser des gestellseitigen bzw. abtriebsseitigen Hohlrades, nimmt das Planetenrad eine Übersetzung der Drehbewegung vor, die von dem Mitnehmer über den Exzenter auf das Planetenrad übertragen wird. Die US2006117890 zeigt einen Verstellantrieb gemäß Oberbegriff des Anspruchs 1. Aufgabe der vorliegenden Erfindung ist es, einen Verstellantrieb der eingangs genannten Art mit hoher Crashfestigkeit und einfacher, kostengünstiger Kombination unterschiedlicher Getriebestufen des Untersetzungsgetriebes zu schaffen.

Diese Aufgabe wird erfindungsgemäß mit den Merkmalen des Anspruchs 1 gelöst.

Die erfindungsgemäße Lösung stellt einen Verstellantrieb mit hoher Crashfestigkeit in Folge der axialen Abstützung des in einer Vorbaugruppe zusammengefassten Teils der Getriebeelemente der zweiten Getriebestufe zur Verfügung und ermöglicht eine einfache Kombination der in die Vorbaugruppe integrierten zweiten Getriebestufe eines Untersetzungsgetriebes mit einer Gehäuseschale, die mit dem Antriebsmotor verbunden ist und in die die erste Getriebestufe des Untersetzungsgetriebes eingesetzt ist, so dass beispielsweise die zweite Getriebestufe des Untersetzungsgetriebes enthaltende Vorbaugruppe für verschiedene Sitzverstelleinrichtungen eingesetzt werden kann und in Abhängigkeit von der jeweiligen Verstelleinrichtung eines Kraftfahrzeugsitzes unterschiedliche Untersetzungen der Motordrehzahl zur Verfügung gestellt werden können.

Die erfindungsgemäße Lösung, zumindest einen Teil der Getriebeelemente der zweiten Untersetzungsgetriebestufe in einer mit der Gehäuseschale verbindbaren Vorbaugruppe anzuordnen und die Getriebeelemente axial durch den Gehäusedeckel und eine mit dem Gehäusedeckel verbundene Abdeckscheibe oder Abdeck- und Führungsscheibe abzustützen, gewährleistet einen Verzahnungseingriff auch bei starker Belastung und insbesondere auch im Crashfall, so dass der Kraftfluss von der Verstelleinrichtung über das selbsthemmende Untersetzungsgetriebe bis zum Antriebsmotor sichergestellt und damit die Einhaltung der eingestellten Sitzposition gewährleistet ist.

Durch die axiale Sicherung der Getriebeelemente und Fixierung der Vorbaugruppe wird eine Schrägstellung der Zahnräder verhindert und der Verzahnungseingriff der Getriebeelemente miteinander, d.h. die Zahnüberdeckung auch im Belastungszustand und Crashfall erhalten, so dass konstant hohe Kräfte übertragbar sind. Durch ergänzende Maßnahmen kann die Verdrehsicherung und Kraftübertragung von der Vorbaugruppe zum Gehäuse auch das Auftreten von Klappergeräuschen verhindern.

In bevorzugter Ausführungsform weist die Gehäuseschale Flansche zur Aufnahme des Antriebsmotors, eine erste Ausnehmung zur Aufnahme eines mit der Motorwelle des Antriebsmotors verbundenen ersten Getriebeelementes der ersten Untersetzungsgetriebestufe und eine zweite Ausnehmung zur Aufnahme eines mit dem ersten Getriebeelement der ersten Untersetzungsgetriebestufe in Eingriff stehenden zweiten Getriebeelements der ersten Untersetzungsgetriebestufe und eines mit dem zweiten Getriebeelement der ersten Untersetzungsgetriebestufe verbundenen Koppelelements zur zweiten Untersetzungsgetriebestufe auf.

Mit dieser Ausbildung der Gehäuseschale wird zum einen der Verzahnungseingriff der Getriebeelemente der ersten Untersetzungsgetriebestufe gewährleistet, die in entsprechend zueinander ausgerichtete Ausnehmungen eingesetzt sind, so dass auch unter hoher Belastung die Getriebeelemente der ersten Untersetzungsgetriebestufe fixiert sind und damit der Verzahnungseingriff der Getriebeelemente gewährleistet ist.

Durch eine topfförmige Ausbildung der zweiten Ausnehmung und eine im Wesentlichen zylinderförmige Außenkontur der Vorbaugruppe, deren Außendurchmesser dem Innendurchmesser der zweiten Ausnehmung angepasst ist, so dass die Vorbaugruppe bündig in die zweite Ausnehmung einsetzbar ist, wird eine Vorpositionierung der Vorbaugruppe in der Gehäuseschale ermöglicht. Alternativ oder zusätzlich kann die Vorbaugruppe an der Gehäuseschale zur Transportsicherung axial fixiert werden.

Weiterhin kann die Vorbaugruppe zur Verdrehsicherung und Kraftübertragung zur Gehäuseschale mit radialem Formschluss und/oder Reibschluss in die zweite Ausnehmung eingesetzt bzw. mit der Gehäuseschale verbunden werden.

Im endmontierten Zustand ist die Vorbaugruppe axial zwischen der Gehäuseschale und der Verstelleinrichtung eingespannt und damit axial gesichert, wobei die Getriebeelemente der ersten Untersetzungsgetriebestufe über den Exzenter mit den in der Vorbaugruppe angeordneten Getriebeelemente der zweiten Untersetzungsgetriebestufe wirkverbunden sind.

Vorzugsweise besteht die erste Untersetzungsgetriebestufe aus einem selbsthemmenden Schneckengetriebe mit einer mit der Motorwelle des Antriebsmotors verbundenen Antriebsschnecke und einem mit der Verzahnung der Antriebsschnecke in Eingriff stehenden Schraubrad.

Die Selbsthemmung eines als erste Untersetzungsgetriebestufe eingesetzten Schneckengetriebes bewirkt eine wirksame Kraftaufnahme auch bei Einleitung hoher Kräfte wie sie insbesondere im Crashfall auftreten.

Durch eine glockenförmig Ausbildung des Gehäusedeckels mit einer Öffnung zur Aufnahme einer Buchse zur axialen Führung der in die Vorbaugruppe integrierten Getriebeelemente der zweiten Untersetzungsgetriebestufe und zur Lagerung des Ritzels und mit einem der Öffnung entgegen gesetzten Rand, der mit der Abdeckscheibe oder Abdeck- und Führungsscheibe verbunden ist, wird ein kompakter Aufbau geschaffen, durch den die Vorbaugruppe als Laserschweissbaugruppe ausgebildet und einfach hergestellt und axial fixiert werden kann. Diese Formgebung des Gehäusedeckels ermöglicht zudem eine geschützte Anordnung der Getriebeelemente der zweiten Untersetzungsgetriebestufe und gleichzeitig eine Festlegung der axialen Länge der Vorbaugruppe, um die Getriebeelemente axial zu sichern und damit den Verzahnungseingriff auch bei starker Belastung und insbesondere bei einer Stoßbelastung zu gewährleisten.

Vorzugsweise enthält die Vorbaugruppe Getriebeelemente eines Taumelradgetriebes mit einem konzentrisch auf einer Welle gelagerten Abtriebsrad mit einer Innenverzahnung, einem mit dem Abtriebsrad verbundenen Ritzel zur Übertragung des Abtriebsmoments auf eine Verzahnungseinrichtung der Verstelleinrichtung, einem mit der Innenverzahnung des Abtriebsrades zusammenwirkenden Taumelrad und einer Führungseinrichtung für das Taumelrad.

Der Einsatz eines Taumelradgetriebes als zweiter Untersetzungsgetriebestufe ermöglicht eine geeignet hohe Übersetzung bei geringem Bauraum, wobei das Taumelrad mittels der Führungseinrichtung in Bezug auf den Gehäusedeckel und damit in Bezug auf das Gehäuse drehfest gehalten und zur Ausführung einer Taumelbewegung auf einer Kreisbahn geführt wird, ohne dass das Taumelrad selbst eine Eigendrehung vollzieht. Durch den Eingriff der Außenverzahnung des Taumelrades in die Innenverzahnung des Abtriebsrades, die sich zur Erzielung einer hohen Untersetzungswirkung in der Zähnezahl nur geringfügig unterscheiden, rollt das drehbar gelagerte Abtriebsrad auf dem drehfest gehaltenen Taumelrad ab, wobei die Drehzahl des Abtriebsrades deutlich geringer ist als die Umlaufdrehzahl des Taumelrades. Dabei dient die Führungseinrichtung dazu, eine Eigendrehung des Taumelrades zu verhindern, eine seitliche Verschiebung des Taumelrades in der Ebene auf einer Kreisbahn jedoch zuzulassen.

Zu diesem Zweck besteht die Führungseinrichtung für das Taumelrad in einer ersten Ausführungsform aus einem Kreuzschieber, der mit zueinander fluchtenden ersten Führungselementen in zueinander fluchtende erste Gegen-Führungselemente des Taumelrades eingreift, und einer Führungsscheibe, die mit zueinander fluchtenden, um 90° gegen die ersten Führungselemente des Kreuzschiebers versetzten zweiten Führungselementen in zueinander fluchtende, um 90° gegen die ersten Führungselemente des Kreuzschiebers versetzte zweite Gegen-Führungselementen des Kreuzschiebers eingreift.

Der Einsatz eines Kreuzschiebers zur Führung des Taumelrades ermöglicht eine exakte Führung des Taumelrades in der Ebene und eine einfache Justierung zur Sicherung des radialen Verzahnungseingriffs des Taumelrades in die Verzahnung des Abtriebsrades durch Dimensionierung der Führungselemente und Gegen-Führungselemente.

Der zur Vorbaugruppe gehörende Teil der Getriebeelemente der zweiten Untersetzungsgetriebestufe ist zwischen dem vorzugsweise topf- oder glockenförmig ausgebildeten Gehäusedeckel und der Abdeckscheibe angeordnet, die mit dem Gehäusedeckel oder mit der Führungsscheibe verbunden ist und in weiteren Ausführungsformen auch als axial federnde Abdeckscheibe oder als kombinierte Abdeck- und Führungsscheibe ausgebildet sein kann.

Die Ausgestaltung der Abdeckscheibe als axial federnde Abdeckscheibe dient nicht nur der axialen Sicherung der Vorbaugruppe, sondern beseitigt auch ein eventuelles axiales Spiel zwischen den Getriebeelementen der Vorbaugruppe, so dass die Überdeckung der in Eingriff stehenden Getriebeelemente gewährleistet ist und keine durch ein axiales Spiel hervorgerufene Geräusche auftreten können.

Durch eine kraft- oder formschlüssige Verbindung der axial federnden Abdeckscheibe mit der Führungsscheibe oder dem Gehäusedeckel ist darüber hinaus eine einfache Montage gewährleistet, indem beispielsweise die axial federnde Abdeckscheibe in den topf- oder glockenförmig ausgebildeten Gehäusedeckel der Vorbaugruppe eingedrückt wird. Dadurch entfallen sonst notwendige Verbindungsverfahren wie Schrauben, Schweißen, Nieten und dergleichen. Darüber hinaus bilden Teile der axial federnden Abdeckscheibe gleichzeitig axiale Anlageflächen für andere Bauteile bzw. für das die erste Untersetzungsgetriebestufe enthaltende Gehäuse.

In bevorzugter Ausgestaltung ist der Umfangsrand der axial federnden Abdeckscheibe mit der Außenkontur, beispielsweise mit den Segmentarmen, des Gehäusedeckels verkrallt, wobei die Verkrallungsgeometrie je nach notwendiger Andrückkraft in unterschiedlichen Anstellwinkeln oder Überdeckungsgraden gegenüber den Umgebungsteilen erfolgen kann.

Durch das Anbringen am Umfang der Abdeckscheibe und der Führungsscheibe versetzt zueinander angeordneter Schweißnähte wird eine zusätzliche Verbindung zwischen der Abdeckscheibe und der Führungsscheibe hergestellt, die Klappergeräusche aufgrund von Herstellungsungenauigkeiten und notwendigen Toleranzen verhindert.

Als Alternative zu der stoffschlüssigen Verbindung des Randes der Abdeckscheibe oder der Abdeck- und Führungsscheibe mit den im Bereich der Segmentarme des Gehäusedeckels angeordneten Schweißnähten kann die Vorbaugruppe auch durch vom Umfang der Abdeckscheibe radial abstehende Flansche mit am Umfang des Gehäusedeckels ausgebildeten Rippen mittels Schraubverbindungen oder in Durchstellungen der Flansche angebrachte, als Radialnieten ausgebildete Nietverbindungen verbunden oder der Umfang der Abdeckscheibe abschnittsweise mit vom Rand des Gehäusedeckels abstehenden Haken verclipst werden, wobei die Haken unmittelbar an einem als Stahlteil ausgebildeten Gehäusedeckel oder an einem angespritzten Kunststoffhaken vorgesehen sind.

In einer bevorzugten Ausführung besteht der Kreuzschieber aus einer Platte mit einer zentrischen Bohrung, die in miteinander fluchtende, horizontal ausgerichtete Führungsschlitze übergeht, in die horizontal ausgerichtete, zueinander fluchtende Führungsnasen des Taumelrads eingreifen, und um 90° zu den horizontalen Führungsschlitzen vertikal ausgerichtete, vom Umfang der Kreuzschieberplatte abstehenden Führungsstegen besteht, die in vertikal ausgerichtete, zueinander fluchtende, von einer zentralen Bohrung der Führungsscheibe ausgehende Führungsausnehmungen der Führungsscheibe eingreifen.

Die Führungsnasen des Taumelrades weisen an den Gleitflächen der Führungsschlitze gleitende Führungsflächen auf. Da die Führungsschlitze und die Führungsnasen so lang sind, dass die Führungsnasen mit geringem Abstand vor dem Fußkreisdurchmesser der Außenverzahnung des Taumelrades enden, weisen die Gleit- und Führungsflächen in radialer Richtung eine maximale Länge auf, so dass eine maximale Führungslänge realisiert wird, die einen sicheren Verzahnungseingriff der Außenverzahnung des Taumelrades in die Innenverzahnung des Abtriebsrades in radialer Richtung gewährleistet.

Zusätzlich weisen die Gleitflächen der Führungsschlitze des Kreuzschiebers und die Führungsflächen der Führungsnasen des Taumelrades eine axiale Länge auf, die gleich der axialen Länge oder Dicke des Kreuzschiebers ist, wodurch in Verbindung mit der maximalen Länge der Führungsschlitze und Führungsnasen bzw. Gleit- und Führungsflächen eine größtmögliche Lagerfläche und damit eine minimale Flächenpressung zwischen dem Taumelrad und dem Kreuzschieber gewährleistet ist. Die Führungsflächen der Führungsnasen und die Gleitflächen der Führungsschlitze können in axialer Richtung waagerecht verlaufen und damit ein kasten- und quaderförmiges Profil ausbilden. Alternativ können die Führungsflächen der Führungsnasen und die Gleitflächen der Führungsschlitze in axialer Richtung schräg verlaufen, d.h. ein trapezförmiges Profil ausbilden, das eine größere Führungsfläche ergibt.

Durch eine Verbindung der Führungsnasen des Taumelrades über einen an der Peripherie der Bohrung des Taumelrades umlaufenden, ringförmigen Steg wird eine große Lagerbreite, d.h. eine große Berührungsfläche, zwischen dem Taumelrad und dem Kreuzschieber gewährleistet, wodurch Kippeffekte vermieden bzw. zumindest reduziert werden und eine höhere Steifigkeit der Führungsnasen gewährleistet ist.

Um zu verhindern, dass die Führungsflächen am Kreuzschieber in den Radiusübergang der Führungsnasen des Taumelrades zur Stirnfläche des Taumelrades hineinragen, weist das Taumelrad auf seiner dem Kreuzschieber zugewandten Stirnseite als Vorsprünge ausgebildete Abstandshalter auf, die den Abstand der einander zugewandten Stirnflächen des Kreuzschiebers und Taumelrades festlegen.

In einem alternativen Taumelradgetriebe als zweite Stufe des zweistufigen Untersetzungsgetriebes enthält die Vorbaugruppe
- ein konzentrisch auf einer Welle gelagertes Abtriebsrad mit einer Innenverzahnung, ein mit dem Abtriebsrad verbundenes Ritzel zur Übertragung des Antriebsmoments auf eine Verzahnung der Verstelleinrichtung,
- ein Taumelrad mit einer ersten Außenverzahnung, die mit der Innenverzahnung des Abtriebsrades zusammenwirkt, wobei sich die Anzahl der Zähne der ersten Außenverzahnung des Taumelrades und der Innenverzahnung des Abtriebsrades sich um wenigstens einen Zahn unterscheidet und der Kopfkreisdurchmesser der ersten Außenverzahnung des Taumelrades um wenigstens eine Zahnhöhe geringer ist als der Fußkreisdurchmesser der Innenverzahnung des Abtriebsrades, und mit einer zweiten Außenverzahnung mit gegenüber der ersten Außenverzahnung kleinerem Kopfkreisdurchmesser,
- den glockenförmigen Gehäusedeckel mit einer Öffnung zur Aufnahme einer Buchse zur axialen Führung der in die Vorbaugruppe integrierten Getriebeelemente des Exzentergetriebes und zur Lagerung des Ritzels,
- eine Führungsscheibe mit einer Innenverzahnung, in die die zweite Außenverzahnung des Taumelrades eingreift, wobei sich die Anzahl der Zähne der zweiten Außenverzahnung des Taumelrades und der Innenverzahnung der Abdeck- und Führungsscheibe um wenigstens einen Zahn unterscheidet und der Kopfkreisdurchmesser der zweiten Außenverzahnung des Taumelrades um wenigstens eine Zahnhöhe geringer ist als der Fußkreisdurchmesser der Innenverzahnung der Führungsscheibe und
- die mit dem der Öffnung des Gehäusedeckels entgegen gesetzten Rand verbundene Abdeckscheibe oder axial federnde Abdeckscheibe zur axialen Abstützung der in die Vorbaugruppe integrierten Getriebeelemente.

In dieser alternativen Ausführungsform des Taumelgetriebes dient das feststehende bzw. gehäusefeste Hohlrad als Führungsscheibe des Taumelgetriebes, das in dem glockenförmigen Gehäusedeckel angeordnet ist und an der Öffnung des glockenförmigen Gehäusedeckels durch eine Abdeckscheibe oder alternativ durch eine axial federnde Abdeckscheibe abgedeckt wird, die entweder mit der Führungsscheibe des Taumelgetriebes oder mit dem glockenförmigen Gehäusedeckel in der vorstehend beschriebenen Weise, beispielsweise durch Verkrallen der axial federnden Abdeckscheibe mit dem Umfangsrand des glockenförmigen Gehäusedeckels, verbunden wird.

In einer zweiten Ausführungsform weist die Vorbaugruppe mit dem alternativen Taumelradgetriebe als zweiter Stufe des zweistufigen Untersetzungsgetriebes
- ein konzentrisch auf einer Welle gelagertes Abtriebsrad mit einer Innenverzahnung, ein mit dem Abtriebsrad verbundenes Ritzel zur Übertragung des Antriebsmoments auf eine Verzahnung der Verstelleinrichtung,
- ein Taumelrad mit einer ersten Außenverzahnung, die mit der Innenverzahnung des Abtriebsrades zusammenwirkt, wobei sich die Anzahl der Zähne der ersten Außenverzahnung des Taumelrades und der Innenverzahnung des Abtriebsrades sich um wenigstens einen Zahn unterscheidet und der Kopfkreisdurchmesser der ersten Außenverzahnung des Taumelrades um wenigstens eine Zahnhöhe geringer ist als der Fußkreisdurchmesser der Innenverzahnung des Abtriebsrades, und mit einer zweiten Außenverzahnung mit gegenüber der ersten Außenverzahnung kleinerem Kopfkreisdurchmesser,
- den glockenförmigen Gehäusedeckel mit einer Öffnung zur Aufnahme einer Buchse zur axialen Führung der in die Vorbaugruppe integrierten Getriebeelemente des Exzentergetriebes und zur Lagerung des Ritzels und
- die mit dem der Öffnung des Gehäusedeckels entgegen gesetzten Rand verbundene Abdeck- und Führungsscheibe zur axialen Abstützung der in die Vorbaugruppe integrierten Getriebeelemente, die eine Innenverzahnung aufweist, in die die zweite Außenverzahnung des Taumelrades eingreift,
- wobei die Anzahl der Zähne der zweiten Außenverzahnung des Taumelrades und der Innenverzahnung der Abdeck- und Führungsscheibe sich um wenigstens einen Zahn unterscheidet und der Kopfkreisdurchmesser der zweiten Außenverzahnung des Taumelrades um wenigstens eine Zahnhöhe geringer ist als der Fußkreisdurchmesser der Innenverzahnung der Abdeck- und Führungsscheibe.

In dieser Ausführungsform des Taumelradgetriebes dient das feststehende bzw. gehäusefeste Hohlrad sowohl als Abdeckscheibe zur formschlüssigen Kraftübertragung von der Vorbaugruppe zur Gehäuseschale als auch als Führungsscheibe des Taumelgetriebes.

Um sicherzustellen, dass die Zahnräder des Abtriebsrades und des Taumelrades auch im Crashfall vollständig im Eingriff bleiben sind der Kopfkreisdurchmesser der ersten Außenverzahnung des Taumelrades und der Fußkreisdurchmesser der Innenverzahnung der Abdeck- und Führungsscheibe derart bemessen, dass sich das Taumelrad in axialer Richtung an der kombinierten Abdeck- und Führungsscheibe abstützt, so dass sich das Taumelrad in axialer Richtung an der kombinierten Abdeck- und Führungsscheibe mit der in der kombinierten Abdeck- und Führungsscheibe vorgesehenen Innenverzahnung abstützt.

In beiden Ausführungsformen eines Taumelradgetriebes weist die Führungsscheibe oder die kombinierte Abdeck- und Führungsscheibe periphere Formschlusszähne auf, die in Formschlussvertiefungen der Gehäuseschale eingreifen.

Die formschlüssige Verbindung zwischen der Führungsscheibe und damit der Vorbaugruppe mit der Gehäuseschale gewährleistet die Verdrehsicherung der Vorbaugruppe und ermöglicht eine Vorpositionierung der Vorbaugruppe in der Gehäuseschale.

Vorzugsweise stehen die Formschlusszähne der Führungsscheibe oder der kombinierten Abdeck- und Führungsscheibe paarweise im rechten Winkel zueinander vom Umfang der Führungsscheibe ab und greifen formschlüssig in die Formschlussvertiefungen am Rand der zweiten Ausnehmung der Gehäuseschale ein, wobei die Formschlusszähne unsymmetrisch am Umfang der Führungsscheibe oder der kombinierten Abdeck- und Führungsscheibe verteilt angeordnet sind. Der Vorteil dabei ist, dass bei ausreichender Anzahl von Formschlusszähnen ein Freiraum an der Gehäuseschale zur Anordnung beispielsweise des Motors verbleibt.

Die Verbindung der Vorbaugruppe mit der Gehäuseschale über mehrere, am Umfang verteilt angeordnete Zähnepaare stellt eine gleichmäßige Kraftübertragung von der Vorbaugruppe zur Gehäuseschale sicher. Durch die unsymmetrische Verteilung der Verzahnung am Umfang werden Engstellen oder Überschneidungen im Bereich der Anbindung des Antriebsmotors berücksichtigt, wobei durch die unsymmetrische Verteilung auf unterschiedliche Bauraumvorgaben Rücksicht genommen wird, da die Führungsscheibe oder die Abdeck- und Führungsscheibe mit der verteilten, paarweise angeordneten Verzahnung so gedreht werden kann, dass sich an der jeweils engsten Stelle diejenige Seite bzw. der Bereich ohne Verzahnung befindet.

Zur formschlüssigen Verbindung des Gehäusedeckels mit der Abdeckscheibe oder der Abdeck- und Führungsscheibe, zwischen denen sich die Getriebeelemente des Taumelradgetriebes befinden, weist der Gehäusedeckel von seinem mit der Führungsscheibe oder der Abdeck- und Führungsscheibe verbundenen Rand abstehende Segmentarme auf, die formschlüssig in Segmentaussparungen der Führungsscheibe oder der Abdeck- und Führungsscheibe eingreifen.

Um eine eindeutige Anlage der Vorbaugruppe in der Gehäuseschale zu gewährleisten, stehen die Segmentarme des Gehäusedeckels in axialer Richtung hinter der Abdeckscheibe oder der Abdeck- und Führungsscheibe zurück. Dadurch ist gewährleistet, dass ausschließlich die Abdeckscheibe oder die Abdeck- und Führungsscheibe an dem umlaufenden Flansch der Gehäuseschale anliegt.

Zu der radial formschlüssigen, die Verdrehsicherung und einen Teil der Kraftübertragung gewährleistenden Verbindung des Gehäusedeckels mit der Abdeckscheibe oder der Abdeck- und Führungsscheibe ist eine zusätzliche Schweißverbindung des Gehäusedeckels mit der Abdeckscheibe oder der Abdeck- und Führungsscheibe im Bereich der Segmentarme des Gehäusedeckels vorgesehen. Diese zusätzliche Fixierung über Schweißnähte verhindert eine Schrägstellung der Zahnräder und gewährleistet eine Zahnüberdeckung im Belastungszustand, die auch im Crashfall erhalten bleibt, so dass konstant hohe Kräfte übertragbar sind.

Zur Vorfixierung der Vorbaugruppe an der Gehäuseschale sind am Rand der Gehäuseschale einen Teil der peripheren Formschlusszähne übergreifende, an den Formschlussvertiefungen der Peripherie der zweiten Ausnehmung der Gehäuseschale ausgebildete Schaberippen, die bei der Montage verquetscht werden, oder Hinterhakungen in der Gehäuseschale vorgesehen.

Vorzugsweise wird die Vorbaugruppe als Laserschweissbaugruppe ausgebildet.

Die wesentlichen Merkmale der Erfindung und deren Variationsmöglichkeiten sollen anhand von in der Zeichnung dargestellten Ausführungsbeispielen erläutert werden. Es zeigen:
- Fig. 1: eine perspektivische Darstellung eines elektromotorischen Verstellantriebs aus zwei Betrachtungsrichtungen;
- Fig. 2: eine perspektivische Explosionsdarstellung der Baugruppen des erfindungsgemäßen Verstellantriebs;
- Fig. 3: eine Seitenansicht des Verstellantriebs gemäß den Fig. 1 und 2;
- Fig. 4: eine Explosionsdarstellung der Vorbaugruppe und eines Taumelradgetriebes mit einer als Kreuzschieber ausgebildeten Führungseinrichtung;
- Fig. 5: eine perspektivische Darstellung des in den Gehäusedeckel eingesetzten Abtriebsrades und Taumelrades des Taumelradgetriebes gemäß Fig. 4;
- Fig. 6: eine perspektivische Darstellung des in den Gehäusedeckel eingesetzten Abtriebsrades, Taumelrades und Kreuzschiebers des Taumelradgetriebes gemäß Fig. 4;
- Fig. 7: eine perspektivische Detailansicht des Taumelrades und Kreuzschiebers im Bereich eines Führungsvorsprungs des Taumelrades;
- Fig. 8: eine Seitenansicht des Abtriebsrades, Taumelrades und Kreuzschiebers gemäß den Fig. 4 und 6;
- Fig. 9: eine perspektivische Gesamtansicht der Vorbaugruppe gemäß Fig. 4 im zusammengebauten Zustand mit Gehäusedeckel und Abdeckscheibe mit schematisch angedeuteten Schweißnähten zwischen dem Gehäusedeckel und der Abdeckscheibe bzw. zwischen der Abdeckscheibe und der Führungsscheibe;
- Fig. 10: eine perspektivische Teilansicht des Antriebsmotors und der Führungsscheibe des Taumelradgetriebes gemäß den Fig. 4 bis 9;
- Fig. 11: eine Detailansicht eines in eine periphere Ausnehmung der Gehäuseschale eingesetzten peripheren Formschlusszahns der Führungsscheibe mit an der peripheren Formschlussvertiefung der Gehäuseschale angeordneten Schaberippen;
- Fig. 12: eine Detailansicht eines in eine periphere Ausnehmung der Gehäuseschale eingesetzten peripheren Formschlusszahns der Führungsscheibe mit an der peripheren Formschlussvertiefung der Gehäuseschale angeordneter Hinterhakung;
- Fig. 13 - 15: schematisch-perspektivische Darstellungen alternativer Verbindungsarten zwischen dem Gehäusedeckel und der Abdeckscheibe;
- Fig. 16: eine perspektivische Ansicht der Vorbaugruppe gemäß Fig. 4 mit einem topf- oder glockenförmigen Gehäusedeckel und einer mit dem Gehäusedeckel zu verkrallenden, axial federnden Abdeckscheibe;
- Fig. 17: eine perspektivische Gesamtansicht der Vorbaugruppe gemäß Fig. 16 bei mit dem Gehäusedeckel verkrallter axial federnder Abdeckscheibe;
- Fig. 18: eine Frontseitenansicht der Vorbaugruppe gemäß Fig. 17 bei mit dem Gehäusedeckel verkrallter axial federnder Abdeckscheibe;
- Fig. 19: einen Längsschnitt durch die Vorbaugruppe entlang der Schnittlinie XIX gemäß Fig. 18;
- Fig. 20: eine perspektivische Ansicht der Vorbaugruppe gemäß Fig. 17 mit aufgestecktem Zahnrad der ersten Untersetzungsgetriebestufe;
- Fig. 21: eine vergrößerte perspektivische Detailansicht der Verkrallung der axial federnden Abdeckscheibe mit dem Gehäusedeckel der Vorbaugruppe;
- Fig. 22: eine perspektivische Explosionsdarstellung einer Vorbaugruppe mit einem alternativen Taumelradgetriebe mit einer als Verzahnung eines gehäusefesten Hohlrades ausgebildeten Führungseinrichtung und einer kombinierten Abdeck- und Führungsscheibe;
- Fig. 23: eine perspektivische Darstellung der zusammengesetzten Vorbaugruppe gemäß Fig. 22;
- Fig. 24: einen perspektivischen Längsschnitt durch die zusammengesetzte Vorbaugruppe gemäß Fig. 23 und
- Fig. 25: eine perspektivische Explosionsdarstellung einer Vorbaugruppe mit alternativen Taumelradgetriebe mit einer als Verzahnung eines gehäusefesten Hohlrades ausgebildeten Führungseinrichtung und einer axial federnden Abdeckscheibe;

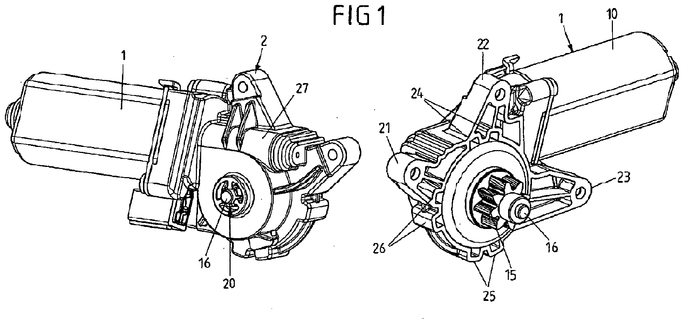

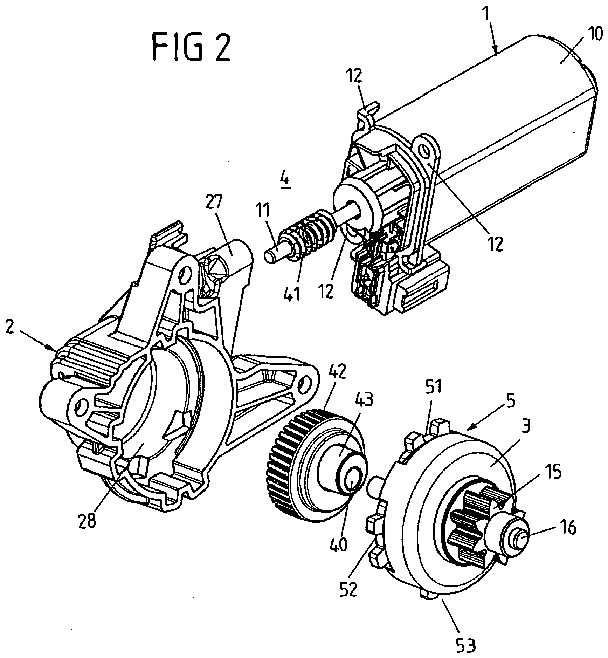

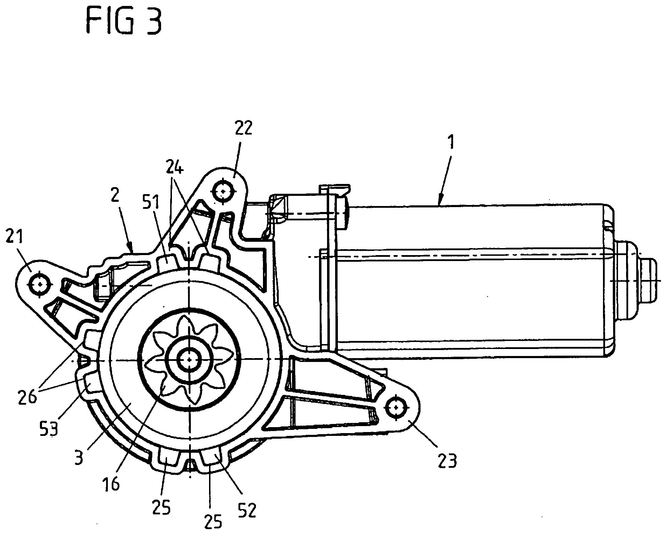

Der erfindungsgemäße Verstellantrieb ist in Fig. 1 in perspektivischer Darstellung aus unterschiedlichen Betrachtungsrichtungen in Fig. 2 in einer Explosionsdarstellung der Baugruppen und in Fig. 3 in einer Seitenansicht dargestellt. Der Verstellantrieb umfasst einen Antriebsmotor 1 mit einem Motorgehäuse 10 und einer Motorwelle 11, auf der drehfest eine Antriebsschnecke 41 eines selbsthemmenden Schneckengetriebes 4 befestigt ist. Eine Gehäuseschale 2 eines Antriebsgehäuses weist eine hohlzylindrische erste Ausnehmung 27 zur Aufnahme der Antriebsschnecke 41 des Schneckengetriebes 4 und zur Lagerung der Motorwelle 11 des Antriebsmotors 1 sowie eine topfförmige zweite Ausnehmung 28 zur Aufnahme einer Vorbaugruppe 5 und einer Baugruppe, die aus einem Schraubrad 42 des Schneckengetriebes 4 und einem mit dem Schraubrad 42 einteilig verbundenen Exzenter 43 besteht, der als Koppelglied zwischen der aus dem Schneckengetriebe 4 bestehenden ersten Untersetzungsgetriebestufe und einer in der Vorbaugruppe 5 enthaltenen zweiten Untersetzungsgetriebestufe dient, die nachstehend anhand zweier verschiedener Ausführungsbeispiele erläutert wird. Eine mittig der topfförmigen zweiten Ausnehmung 28 angeordnete Bohrung 20 dient zur Aufnahme einer Welle 16 der Vorbaugruppe 5, die durch eine Bohrung 40 des aus dem Schraubrad 42 und dem Exzenter 43 bestehenden Bauteils gesteckt wird.

Die Gehäuseschale 2 weist mehrere radial von der topfförmigen zweiten Ausnehmung 28 abstehende Flanscharme 21, 22, 23 mit endseitigen Montageöffnungen auf, die zur Aufnahme von Befestigungsmitteln zur Verbindung der Gehäuseschale 2 und damit des Verstellantriebs mit der tragenden Struktur einer Verstelleinrichtung eines Kraftfahrzeugsitzes dienen, die mittels des Verstellantriebs verstellt wird. Am Rand der topfförmigen zweiten Ausnehmung 28 sind verteilt drei paarweise angeordnete Formschlussvertiefungen 24 bis 26 vorgesehen, die der Verdrehsicherung der in die topfförmige zweite Ausnehmung 28 eingesetzten Vorbaugruppe 5 mit dem auf die Welle 16 der Vorbaugruppe 5 gesteckten Bauteil aus dem Schraubrad 42 und dem Exzenter 43 dienen.

Die Verbindung des Antriebsmotors 1 mit der Gehäuseschale 2 erfolgt über mehrere an der Stirnseite des Motorgehäuses 10 verteilt angeordnete Flansche 12 mit entsprechenden Aufnahmen der Gehäuseschale 2.

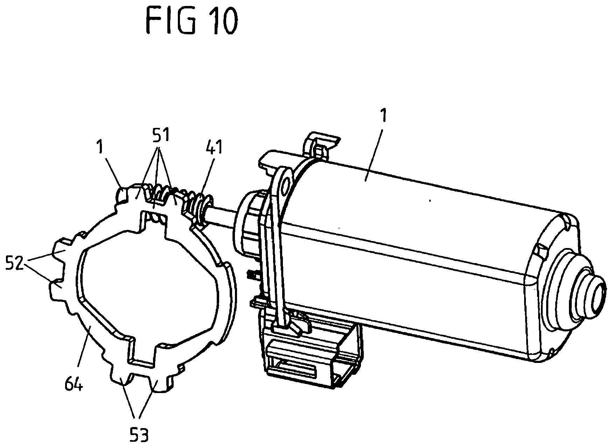

Die Vorbaugruppe 5 bildet gemäß den Fig. 2 und 3 eine geschlossene Baueinheit, die einen topfförmigen Gehäusedeckel 3 enthält, in dessen der Gehäuseschale 2 abgewandte Öffnung eine Laufbuchse 30 eingesetzt ist. Der topfförmige Gehäusedeckel 3 verschließt die topfförmige zweite Ausnehmung 28 der Gehäuseschale 2 in dem in den Fig. 1 und 3 dargestellten fertig montierten Zustand. Zur Verdrehsicherung der Vorbaugruppe 5 und Kraftübertragung von der Vorbaugruppe 5 zur Gehäuseschale 2 sind am Umfang der Vorbaugruppe 5 verteilt paarweise angeordnete Formschlusszähne 51, 52, 53 vorgesehen, die in die ebenfalls paarweise angeordneten peripheren Formschlussvertiefungen 24, 25, 26 am Rand der topfförmigen zweiten Ausnehmung 28 der Gehäuseschale 2 einsetzbar sind. Wie die Seitenansicht gemäß Fig. 3 zeigt, sind die Formschlusszähne 51, 52, 53 und Formschlussvertiefungen 24, 25, 26 zur formschlüssigen Verbindung zwischen der Gehäuseschale 2 und der Vorbaugruppe 5 unsymmetrisch in Bezug auf die Welle 16 der Vorbaugruppe 5 angeordnet, um Engstellen bei der Verbindung zwischen der Gehäuseschale 2 und dem Antriebsmotor 1 zu berücksichtigen, was nachfolgend in Verbindung mit der schematischen Darstellung gemäß Fig. 10 erläutert wird.

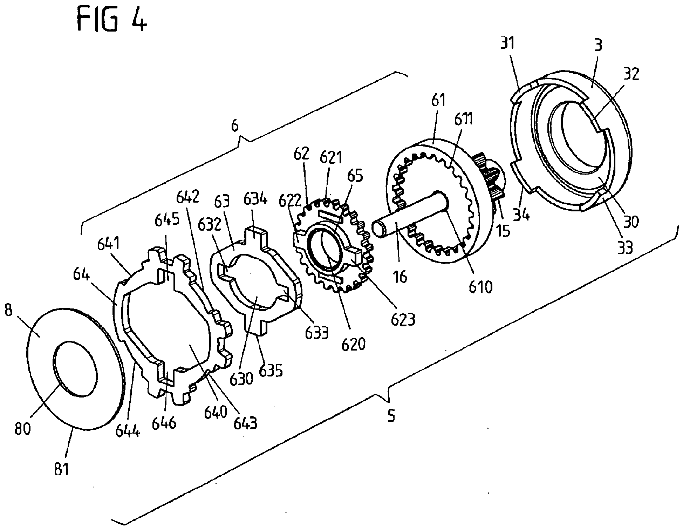

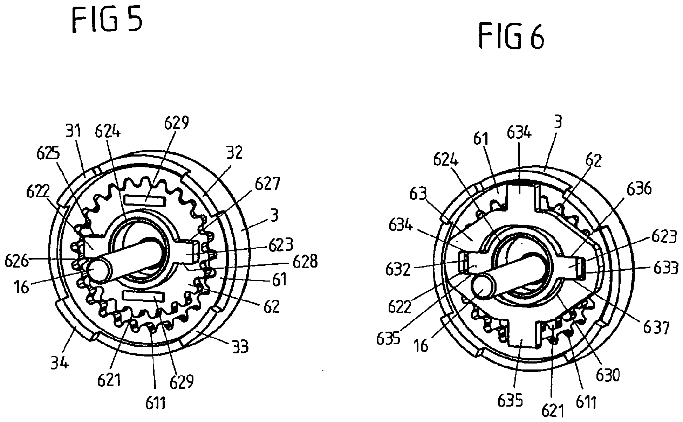

Fig. 4 zeigt in einer Explosionsdarstellung sowohl die Bauelemente der Vorbaugruppe 5 als auch der in die Vorbaugruppe 5 integrierten Getriebeelemente einer ersten Ausführungsform des Taumelradgetriebes 6 und die Fig. 5 und 6 zeigen die Verbindung der Getriebeelemente des Taumelradgetriebes 6, die in den Gehäusedeckel 3 eingesetzt und auf die Welle 16 aufgesteckt sind.

Das die zweite Untersetzungsgetriebestufe des Untersetzungsgetriebes bildende Taumelradgetriebe 6 besteht aus einem Abtriebsrad 61 mit einer Innenverzahnung 611, das mit einem Abtriebsritzel 15 verbunden ist, das mit einem entsprechenden Getriebeelement der Verstelleinrichtung, die beispielsweise aus einer Sitzhöhenverstellung, Sitztiefenverstellung, Lordoseverstellung, Lehnenneigungsverstellung oder Sitzlängsverstellung besteht, verbunden ist. Mit der Innenverzahnung 611 des Abtriebsrades 61 kämmt die Außenverzahnung 621 eines Taumelrades 62, wobei sich die Zähnezahl der Außenverzahnung 621 des Taumelrades 62 von der Innenverzahnung 611 des Abtriebsrades 61 um mindestens einen Zahn unterscheidet. In eine zentrische Bohrung 620 des Taumelrades 62 ist eine Buchse 65 eingesetzt, die auf den Außenumfang des Exzenters 43 gemäß Fig. 2 aufgesteckt wird, der als Koppelglied zwischen der aus dem Schneckengetriebe 4 gebildeten ersten Untersetzungsgetriebestufe und dem aus dem Taumelradgetriebe 6 gebildeten zweiten Untersetzungsgetriebestufe des Untersetzungsgetriebes dient.

Eine aus einem plattenförmigen Kreuzschieber 63 und einer ringförmigen Führungsscheibe 64 gebildete Führungseinrichtung dient zur Führung des Taumelrades 62 in einer Ebene ohne Eigendrehung des Taumelrades 62, das somit eine Taumelbewegung auf einer Kreisbahn ausführt. Infolge der exzentrischen Bewegung des Exzenters 43 um die Welle 16 und der um mindestens einen Zahn geringeren Zähnezahl der Außenverzahnung 621 des Taumelrades 62 gegenüber der Innenverzahnung 611 des Abtriebsrades 61 führt das Taumelrad 62 eine oszillierende, aber drehfeste Bewegung um die Welle 16 aus, wobei wegen der hohen Untersetzungswirkung die Drehzahl des Abtriebsrades 61 deutlich geringer ist als die Umlaufdrehzahl des Taumelrades 62.

Zur Führung des Taumelrades 62 weist das Taumelrad 62 diametral zueinander angeordnete, miteinander fluchtende Führungsnasen 622, 623 auf, die in Führungsschlitze 632, 633 des Kreuzschiebers 63 eingreifen, die ebenfalls diametral und zueinander fluchtend angeordnet von einer zentrischen Öffnung 630 des Kreuzschiebers 63 ausgehen. Die Führungsnasen 622, 623 des Taumelrades 62 und die Führungsschlitze 632, 633 des Kreuzschiebers 63 bilden eine Gleitverbindung bei der die Führungsflächen 625 - 628 (Fig. 5) der Führungsnasen 622, 623 bei der Taumelbewegung des Taumelrades 62 über die Gleitflächen 634 - 637 (Fig. 6) der Führungsschlitze 632, 633 des Kreuzschiebers 63 gleiten.

Die Führungsschlitze 632, 633 und die Führungsnasen 622, 623 weisen dabei eine solche Länge auf, dass die Führungsnasen 622, 623 gemäß den Fig. 4 und 5 kurz vor dem Fußkreisdurchmesser der Außenverzahnung 621 des Taumelrades 62 enden, so dass die Gleit- und Führungsflächen 634 - 637 bzw. 625 - 628 in radialer Richtung eine maximale Führungslänge realisieren, die einen sicheren Verzahnungseingriff der Außenverzahnung 621 des Taumelrades 62 in die Innenverzahnung 611 des Abtriebsrades 61 in radialer Richtung gewährleistet.

Die Gleitflächen 634 - 637 der Führungsschlitze 632, 633 des Kreuzschiebers 63 und die Führungsflächen 625 - 628 der Führungsnasen 622, 623 des Taumelrades 62 weisen zudem eine axiale Länge auf, die gemäß Fig. 6 gleich der axialen Länge oder Dicke des Kreuzschiebers 62 ist, wodurch in Verbindung mit der maximalen Länge der Führungsschlitze 632, 633 und Führungsnasen 622, 623 und damit der Gleit- und Führungsflächen 634 - 637 bzw. 625 - 628 eine größtmögliche Lagerfläche und damit eine minimale Flächenpressung zwischen dem Taumelrad 62 und dem Kreuzschieber 63 sichergestellt ist.

Die Führungsflächen 625 - 628 der Führungsnasen 622, 623 und die Gleitflächen 634 - 637 der Führungsschlitze 632, 633 können in axialer Richtung waagerecht verlaufen und damit ein kasten- bzw. quaderförmiges Profil wie in den Fig. 5 und 6 dargestellt ausbilden. Alternativ können die Führungsflächen 625 - 628 der Führungsnasen 622, 623 und die Gleitflächen 634 - 637 der Führungsschlitze 632, 633 in axialer Richtung schräg verlaufen, d.h. ein trapezförmiges Profil ausbilden, woraus eine größere Führungsfläche resultiert.

Senkrecht zur Ausrichtung der Führungsschlitze 632, 633 des Kreuzschiebers 63 sind Führungszapfen 634, 635 angeordnet, die vom Umfang des Kreuzschiebers 63 abstehen. Die Führungszapfen 634, 635 greifen in Führungsschlitze 645, 646 der Führungsscheibe 64 der Führungseinrichtung ein, die ebenfalls diametral zueinander angeordnet von einer zentrischen Öffnung 640 ausgehen. Am Umfang der Führungsscheibe 64 sind in unsymmetrischer Anordnung paarweise die Formschlusszähne 51, 52, 53 zur Verdrehsicherung der Vorbaugruppe 5 angeordnet, die - wie vorstehend beschrieben - in die Formschlussvertiefungen 24, 25, 26 der Gehäuseschale 2 eingreifen.

Die Vorbaugruppe 5 wird durch eine kreisringförmige Abdeckscheibe 8 mit einer kreisförmigen Öffnung 80 abgeschlossen, die zur Abstützung der Vorbaugruppe 5 in axialer Richtung mit ihrem Umfangsrand 81 mit dem Gehäusedeckel 3 verbunden wird, so dass der Eingriff der Außenverzahnung 621 des Taumelrades 62 in die Innenverzahnung 611 des Abtriebsrades 61 auch bei Stoßbelastungen und insbesondere im Crashfall gesichert ist. Die Verbindung des Gehäusedeckels 3 mit der Abdeckscheibe 8 zur axialen Abstützung der Vorbaugruppe 5 wird nachstehend näher erläutert.

Fig. 5 zeigt das mit seiner Öffnung 610 auf die Welle 16 aufgesteckte Abtriebsrad 61, in dessen Innenverzahnung 611 die Außenverzahnung 621 des Taumelrades 62 teilweise eingreift. Auf das Taumelrad 62 wird gemäß Fig. 6 der Kreuzschieber 63 aufgesteckt, so dass die kurz vor der Außenverzahnung 621 des Taumelrades 62 endenden horizontalen Führungsnasen 622, 623 des Taumelrades 62 mit maximaler Länge in die Führungsschlitze 632, 633 des Kreuzschiebers 63 eingreifen und einen sicheren Verzahnungseingriff der Außenverzahnung 621 des Taumelrades 62 in die Innenverzahnung 611 des Abtriebsrades 61 in radialer Richtung gewährleisten.

Des Weiteren weisen die horizontalen Gleitflächen 634 - 637 der Führungsschlitze 632, 633 des Kreuzschiebers 63 und die Führungsflächen 625 - 628 der Führungsnasen 622, 623 des Taumelrades 62 eine axiale Länge auf, die gleich der axialen Länge oder Dicke des Kreuzschiebers 63 ist, wodurch in Verbindung mit der maximalen Länge der Führungsschlitze 632, 633 und Führungsnasen 622, 623 bzw. Gleit- und Führungsflächen 634 - 637, 625 - 628 eine größtmögliche Lagerfläche und damit eine minimale Flächenpressung zwischen dem Taumelrad 62 und dem Kreuzschieber 63 gewährleistet ist.

Fig. 5 zeigt auch die Ausbildung eines umlaufenden, ringförmigen Steges 624 an der Peripherie der Bohrung 620 des Taumelrades 62, der die Führungsnasen 622, 623 verbindet und dieselbe axiale Länge wie die Führungsnasen 622, 623 aufweist. Durch den umlaufenden Steg 624 wird eine große Lagerbreite, d.h. eine große Berührungsfläche, zwischen dem Taumelrad 62 und dem Kreuzschieber 63 gewährleistet, wodurch Kippeffekte vermieden bzw. zumindest reduziert werden und eine höhere Steifigkeit der Führungsnasen 622, 623 gewährleistet ist.

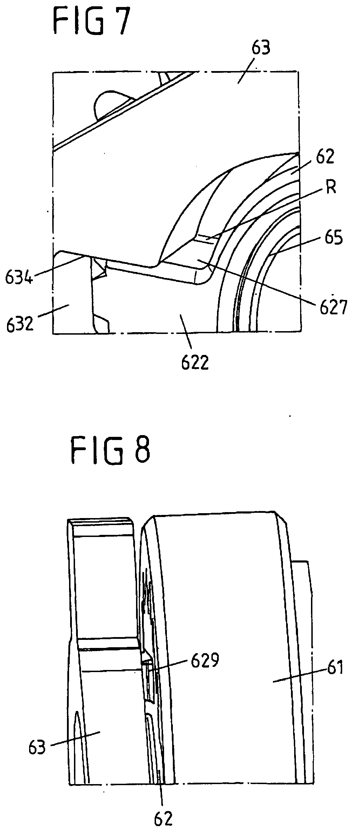

Weiterhin zeigt Fig. 5 diametral zueinander angeordnete und um 90 ° zu den Führungsnasen 622, 623 versetzte, als horizontale Stege ausgebildete Abstandshalter 625, 626, deren Bedeutung nachfolgend anhand der Fig. 7 und 8 näher erläutert wird.

Fig. 7 zeigt eine Detailansicht des Zusammenwirkens der Führungsschlitze 632, 633 des Kreuzschiebers 63 und der Führungsnasen 622, 623 des Taumelrades 62, deren Gleitund Führungsflächen 634 - 637, 625 - 628 bei der Taumelbewegung des Taumelrades 62 ineinander gleiten. Um zu verhindern, dass die Gleitflächen 634 - 637 der Führungsschlitze 632, 633 des Kreuzschiebers 63 in den Radiusübergang R von der Stirnfläche des Taumelrades 62 zu den Führungsflächen 625 - 628 hineinragen, sind gemäß den Fig. 5 und 8 an der Stirnseite des Taumelrades 62 diametral zueinander Abstandshalter 629 angeordnet, die einen minimalen Abstand zwischen dem Kreuzschieber 63 und der dem Kreuzschieber 63 zugewandten Stirnseite des Taumelrades 62 gewährleisten Abstandshalter 629 stellen somit eine definierte Auflage der Gleitflächen 634 - 637 auf den Führungsflächen 625 - 628 sicher, so dass ein Verkippen des Kreuzschiebers 63 vermieden wird..

Nach der Montage des Kreuzschiebers 63 gemäß Fig. 6 wird die Führungsscheibe 64 so auf den Kreuzschieber 63 aufgesteckt, dass die Führungsschlitze 645, 646 der Führungsscheibe 64 in die Führungszapfen 634, 635 des Kreuzschiebers 63 eingreifen.

Die aus dem Kreuzschieber 63 und der Führungsscheibe 64 gebildete kreuzförmige Führungseinrichtung des Taumelradgetriebes 6 mit den diametral zueinander angeordneten Führungsnasen 622, 623, Führungsschlitzen 632, 633, 645, 646 und Führungszapfen 634, 635 bewirkt, dass die Führungsnasen 622, 623 des Taumelrades 6 in die Führungsschlitze 632, 633 des Kreuzschiebers 63 eintauchen, während die Führungsstege 634, 635 des Kreuzschiebers 63 in die Führungsschlitze 645, 646 der Führungsscheibe 64 eintauchen. Die im rechten Winkel zueinander angeordneten Führungsschlitze 632, 633, 645, 646 des Kreuzschiebers 63 und der Führungsscheibe 64 bewirken, dass beim Antrieb des Taumelrades 62 durch den Exzenter 43 eine Bewegung des Taumelrades 62 in der Weise erfolgt, dass das Taumelrad 62 bei einer Umdrehung des Schraubrades 42 eine kreisförmige Bewegung ohne Eigenrotation ausführt, bei der das Taumelrad 62 horizontal durch die Führungsnasen 622, 623 in den Führungsschlitzen 632, 633 und vertikal durch die Führungszapfen 634, 635 in den Führungsschlitzen 645, 646 der Führungsscheibe geführt wird. In Abhängigkeit von der unterschiedlichen Zähnezahl der Außenverzahnung 621 des Taumelrades 62 und der Innenverzahnung 611 des Abtriebsrades 61 wird das Abtriebsrad 61 bei jeder Umdrehung des Schraubrades 42 um eine oder mehrere Zahnteilungen in Umfangsrichtung gedreht.

Beim Aufstecken der Führungsscheibe 64 auf den Kreuzschieber 63 greifen am Umfang des Randes des Gehäusedeckels 3 regelmäßig verteilt und paarweise diametral zueinander angeordnete Segmentarme 31 bis 34 in korrespondierende, am Umfang der Führungsscheibe 64 ausgebildete, in Fig. 4 bezeichnete Segmentaussparungen 641 bis 644 ein und sichern damit die Lage der Führungsscheibe 64 in radialer Richtung. Dabei ragen die paarweise angeordneten, unsymmetrisch am Umfang der Führungsscheibe 64 verteilt angeordneten Formschlusszähne 51, 52, 53 in radialer Richtung über den Rand des Gehäusedeckels 3 hinaus.

Abschließend wird die Abdeckscheibe 8 in die durch die Segmentarme 31 bis 34 des Gehäusedeckels 3 gebildete Öffnung gesteckt und kommt mit ihrem Umfangsrand 81 zur Anlage an die Innenseiten der Segmentarme 31 bis 34 des Gehäusedeckels 3 und mit ihrer den Getriebeelementen des Taumelradgetriebes 6 zugewandten Stirnfläche zur Anlage an die Führungsscheibe 64, wobei die Welle 16 durch die kreisförmigen Öffnung 80 der Abdeckscheibe 8 ragt.

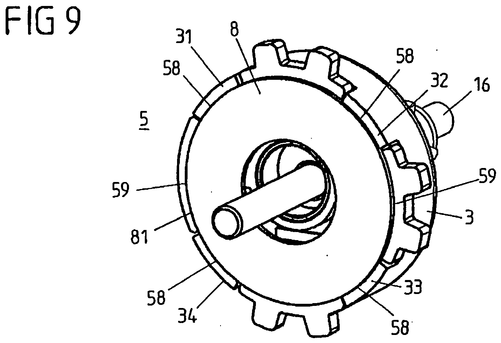

Fig. 9 zeigt die Vorbaugruppe 5 im zusammengebauten Zustand mit der zentralen Welle 16, die durch die Bohrung 610 des Abtriebsrades 61, die Buchse 65 in der zentrischen Bohrung 620 des Taumelrades 62, die Öffnung 630 des Kreuzschiebers 63, die Öffnung 640 der Führungsscheibe 64 und die kreisförmigen Öffnung der Abdeckscheibe 8 gesteckt ist.

Nach dem Zusammenbau der Vorbaugruppe 5 erfolgt eine Fixierung der Vorbaugruppe 5 mittels zwischen den Segmentarmen 31 bis 34 des Gehäusedeckels 3 und dem Umfangsrand 81 der Abdeckscheibe 8 angebrachten ersten Schweißnähten 58, die vorzugsweise mittels Laserschweißung hergestellt werden und eine Schrägstellung des Abtriebsrades 61 und Taumelrades 62 verhindern, so dass die Zahnüberdeckung der Außenverzahnung 621 des Taumelrades 62 und der Innenverzahnung 611 des Abtriebsrades 61 im Belastungszustand zur Übertragung hoher Kräfte und insbesondere im Crashfall erhalten bleibt.

Zweite Schweißnähte 59 verbinden den Umfangsrand 81 der Abdeckscheibe 8 mit dem Umfangsrand der Führungsscheibe 64 und verhindern das Auftreten von Klappergeräuschen.

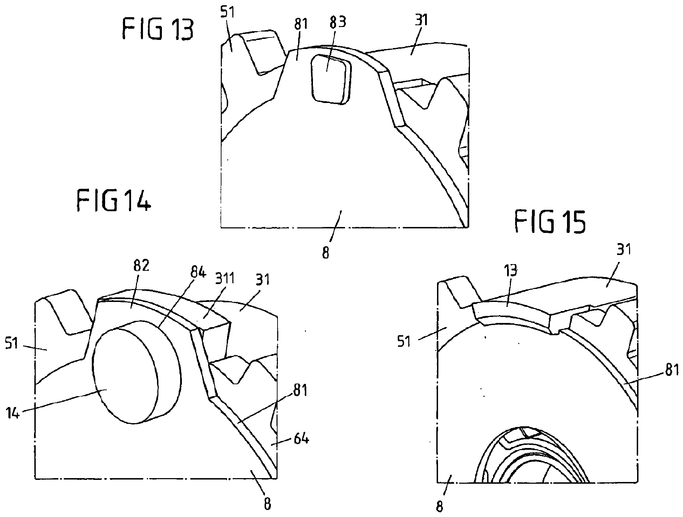

Alternativen zum Anbringen der ersten Schweißnähte 58 zwischen den Segmentarmen 31 bis 34 des Gehäusedeckels 3 und dem Umfangsrand 81 der Abdeckscheibe 8 werden nachfolgend anhand der Fig. 13 bis 15 beschrieben.

Nach der Montage und axialen Fixierung der Getriebeelemente der Vorbaugruppe 5 durch die Verbindung der Segmentarme 31 bis 34 des Gehäusedeckels 3 mit dem Rand der Abdeckscheibe 8 wird das mit dem Exzenter 43 verbundene Schraubrad 42 der ersten Untersetzungsgetriebestufe 4 mit der Bohrung 40 auf die Welle 16 aufgesteckt, so dass der Exzenter 43 in die Buchse 65 des Taumelrades 62 eingreift. Die mit dem Schraubrad 42 und Exzenter 43 verbundene Vorbaugruppe 5 wird anschließend in die zweite Ausnehmung 28 der Gehäuseschale 2 eingesetzt, wobei die paarweise und unsymmetrisch am Umfang der Führungsscheibe 64 angeordneten Formschlusszähne 51, 52, 53 in die Formschlussvertiefungen 24 bis 26 am Rand der zweiten Ausnehmung 28 der Gehäuseschale 2 eingreifen und eine formschlüssige Verbindung zwischen der Vorbaugruppe 5 und der Gehäuseschale 2 herstellen. Dabei greift die Welle 16 der Vorbaugruppe 5 in die Öffnung 20 der Gehäuseschale 2 ein und ist somit in dieser und in der Öffnung 610 des Abtriebsrades 61 gelagert.

Fig. 10 zeigt in schematischer Darstellung die unsymmetrische Anordnung der paarweise angeordneten Formschlusszähne 51, 52, 53 am Umfang der Führungsscheibe 64, die bei in die zweite Ausnehmung 28 der Gehäuseschale 2 eingesetzter Vorbaugruppe 5 in die paarweise angeordneten Formschlussvertiefungen 24, 25, 26 am Umfang der zweiten Ausnehmung 28 der Gehäuseschale 2 zur Verdrehsicherung der Vorbaugruppe 5 eingreifen. Da im Bereich der Stirnseite des Antriebsmotors 1 eine Engstelle oder Überschneidung mit den Formschlusszähnen 51, 52, 53 und den Formschlussvertiefungen 24, 25, 26 entstehen würde, wird die Führungsscheibe 64 beim Zusammenbau der Vorbaugruppe 5 so gedreht, dass sich an der engsten Stelle der Bereich der Führungsscheibe 64 ohne Formschlusszähne 51, 52, 53 befindet. Damit kann bei Anwendungen mit anderen Bauraumvorgaben die Führungsscheibe 64 stets so gedreht in die Vorbaugruppe 5 eingebaut werden, dass keine Überschneidungen entstehen.

Nachstehend soll kurz die an sich bekannte Funktionsweise des aus der ersten und zweiten Getriebeuntersetzungsstufe gebildeten Untersetzungsgetriebes beschrieben werden.

Die mit der Motorwelle 11 verbundene Antriebsschnecke 41 des selbsthemmenden Schneckengetriebes 4 greift mit seiner Schneckenverzahnung in die Außenverzahnung des Schraubrades 42 ein, so dass durch Betätigen des Antriebsmotors 1 und Drehung der Antriebsschnecke 41 das Schraubrad 42 um die in die Öffnung 40 gesteckte Welle 16 in Drehung versetzt wird. Der in die Buchse 65 des Taumelrades 62 eingreifende, mit dem Schraubrad 42 verbundene Exzenter 43 bewegt das Taumelrad 62 auf einer Kreisbahn, wobei die aus dem Kreuzschieber 63 und der Führungsscheibe 64 bestehende Führungseinrichtung eine Eigendrehung des Taumelrades 62 verhindert.

Das Taumelrad 62 wirkt mit seiner Außenverzahnung 621 mit der Innenverzahnung 611 des Abtriebsrades 61 zusammen, wobei die Abrollbewegung des Abtriebsrades 61 auf der Außenverzahnung 621 des Taumelrades 62 gegenüber dem drehfest gehaltenen Taumelrad 62 eine Untersetzung der Drehzahl des Abtriebsrades 61 gegenüber der Drehzahl des Exzenters 43 bzw. der der Drehzahl des Exzenters 43 entsprechenden Umlaufdrehzahl des Taumelrades 62 bewirkt. Mit dem zweistufigen, selbsthemmenden Untersetzungsgetriebe, das aus der als Schneckengetriebe 4 ausgebildeten ersten Untersetzungsgetriebestufe und der als Taumelradgetriebe 6 ausgebildeten zweiten Untersetzungsgetriebestufe besteht, wird die hohe Drehzahl des Antriebsmotors 1 in eine untersetzte, langsame Drehbewegung des Abtriebsrades 61 und damit des mit dem Abtriebsrad 61 verbundenen Ritzels 15 bewirkt, das in ein Abtriebselement einer Verstelleinrichtung des Kraftfahrzeugsitzes, beispielsweise in ein Zahnsegment, ein Zahnrad oder eine Zahnstange eingreift.

Die paarweise und unsymmetrisch am Umfang der Führungsscheibe 64 verteilt angeordneten Formschlusszähne 51, 52, 53 ermöglichen in Verbindung mit den Formschlussvertiefungen 24, 25, 26 am Rand der zweiten Ausnehmung 28 der Gehäuseschale 2 eine formschlüssige Verdrehsicherung der Vorbaugruppe 5 in der Gehäuseschale 2.

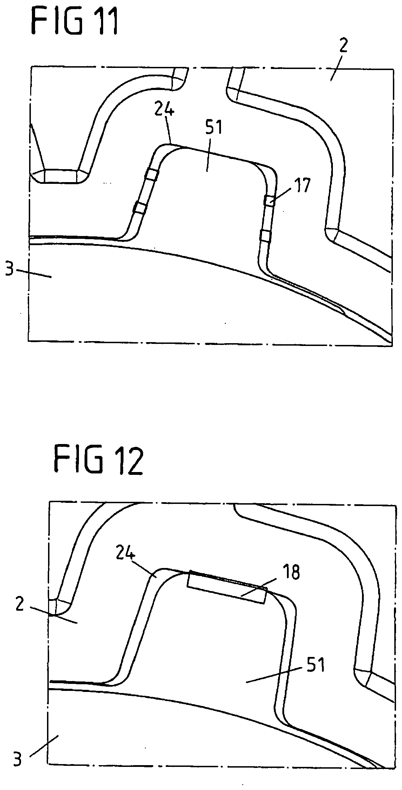

Zur axialen Vorfixierung und/oder Transportsicherung können gemäß den Fig. 11 und 12 an den Formschlussvertiefungen 24, 25, 26 bei der Montage verquetschte Schaberippen 17 oder am Rand der Formschlussvertiefungen 24, 25, 26 angeordnete Hinterhakungen 18 vorgesehen werden, so dass die Vorbaugruppe 5 mit der Gehäuseschale 2 und damit als Teil des Verstellantriebs bis zur endgültigen Montage des Verstellantriebs gesichert verbunden werden kann. Zur endgültigen Montage werden durch die Bohrungen der radial von der Gehäuseschale 2 abstehenden Flanscharme 21, 22, 23 Befestigungsschrauben gesteckt und mit dem feststehenden Teil einer Verstelleinrichtung verbunden, wobei das Ritzel 16 in das entsprechenden Abtriebselement der Verstelleinrichtung eingreift.

Als Alternativen zu den in Fig. 9 dargestellten ersten Schweißnähten 58 zum Fixieren der Vorbaugruppe 5 sind in den Fig. 13 bis 15 verschiedene Verbindungsarten zur festen Verbindung des Gehäusedeckels 3 mit der Abdeckscheibe 8 dargestellt.

Bei der in Fig. 13 dargestellten perspektivischen Teilansicht weisen vom Umfang der Abdeckscheibe 8 radial abstehende Flansche 82 Durchstellungen 83 auf, die mit den Enden der Segmentarme 31 - 34 des Gehäusedeckels 3 vertaumelt, d. h. über Radialnieten mit den Segmentarmen 31 bis 34 des Gehäusedeckels 3 verbunden werden.

Anstelle einer Nietverbindung kann gemäß Fig. 14 eine Schraubverbindung vorgesehen werden, bei der eine Schraube 14 durch eine Öffnung 84 in den vom Umfangsrand 81 der Abdeckscheibe 8 radial abstehenden Flanschen 82 eingesetzt und mit einem in der Stirnseite der Segmentarme 31 bis 34 des Gehäusedeckels 3 angeordneten Gewinde verschraubt wird.

In Fig. 15 ist in einer perspektivischen Detailansicht eine Clipsverbindung zwischen dem Gehäusedeckel 3 und der Abdeckscheibe 8 vorgesehen, bei der an der Stirnseite der Segmentarme 31 bis 34 des Gehäusedeckels 3 angeordnete Haken 13 mit dem Umfangsrand 81 der Abdeckscheibe 8 verclipst wird. Die Haken 13 können als Stahlteil der Segmentarme 31 bis 34 des Gehäusedeckels 3 oder als angespritzte Kunststoffhaken ausgebildet werden.

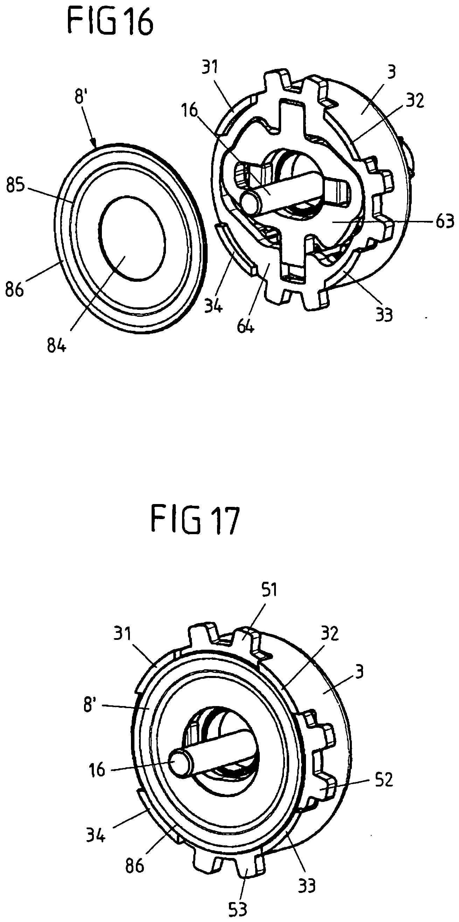

In den Fig. 16 bis 21 ist als Alternative eine Verbindung zwischen einem Gehäusedeckel 3 und einer axial federnden Abdeckscheibe 8' dargestellt.

Fig. 16 zeigt in einer perspektivischen Ansicht die Vorbaugruppe gemäß Fig. 9 ohne Abdeckscheibe 8 aber mit einer getrennt hiervon zeichnerisch dargestellten, axial federnden Abdeckscheibe 8', die anstelle der Abdeckscheibe 8 in den Gehäusedeckel 3 eingesetzt und mit den Segmentarmen 31 bis 34 des Gehäusedeckels 3 verkrallt wird. Zu diesem Zweck weist die axial federnde Abdeckscheibe 8' zwischen der Bohrung 80 und einem Verkrallungsrand 86 ein Federprofil 85 auf, das nach dem Verkrallen des Verkrallungsrandes 86 mit den Segmentarmen 31 bis 34 des Gehäusedeckels 3 eine axiale Druckkraft auf die Getriebeelemente der zweiten Untersetzungsstufe der Vorbaugruppe ausübt. Dadurch wird ein vorhandenes axiales Spiel zwischen den Getriebeelementen der Vorbaugruppe herausgenommen und ein optimaler Eingriff der Getriebeelemente bei minimaler Geräuscherzeugung gewährleistet. Auch unter hoher Krafteinwirkung, beispielsweise im Crashfall, wird damit verhindert, dass die Getriebeelemente der zweiten Untersetzungsstufe außer Eingriff kommen.

Ein weiterer Vorteil der axial federnden Abdeckscheibe 8' besteht darin, dass ausgehend von der perspektivischen Darstellung gemäß Fig. 16 die axial federnde Abdeckscheibe 8' lediglich in die Außenkontur des Gehäusedeckels, beispielsweise in die Segmentarme 31 bis 34, eingedrückt werden muss, um die Vorbaugruppe gemäß Fig. 17 zu komplettieren. Dies gewährleistet eine sehr einfache Montage bei gleichzeitig axialer Abstützung der Getriebeelemente der zweiten Untersetzungsstufe.

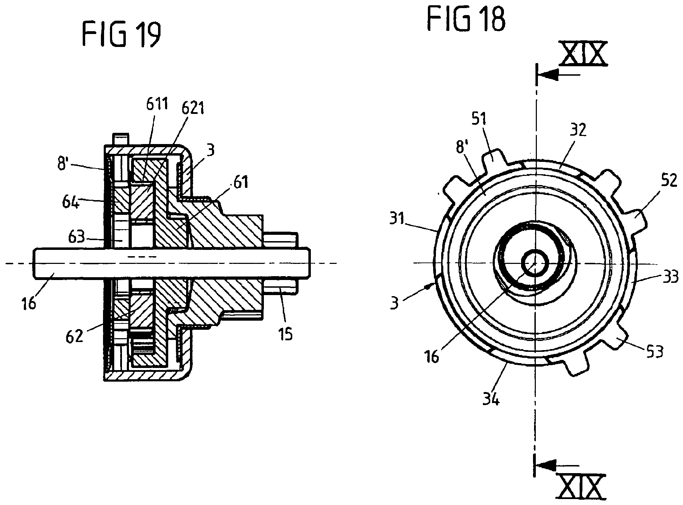

Fig. 18 zeigt eine Frontseitenansicht und Fig. 19 in einem Längsschnitt die komplettierte Vorbaugruppe gemäß Fig. 17 mit in die Außenkontur des Gehäusedeckels 3 eingedrückter axial federnder Abdeckscheibe 8', deren Verkrallungsrandes 86 mit dem Innenrand der Segmentarme 31 bis 34 verkrallt ist und die axial federnd an den Getriebeelementen der zweiten Untersetzungsstufe anliegt.

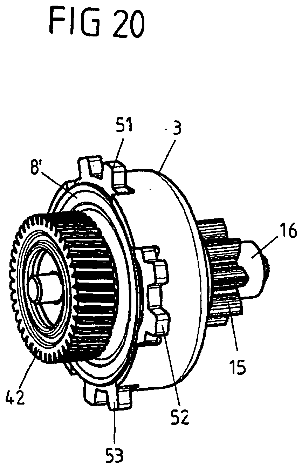

Nach dem Zusammenbau der Vorbaugruppe wird gemäß Fig. 20 das Zahnrad der ersten Untersetzungsgetriebestufe analog zur Darstellung und Beschreibung der Fig. 2 auf die Welle 16 der Vorbaugruppe 5 aufgesteckt und die Vorbaugruppe 5 mit der Gehäuseschale 2 verbunden.

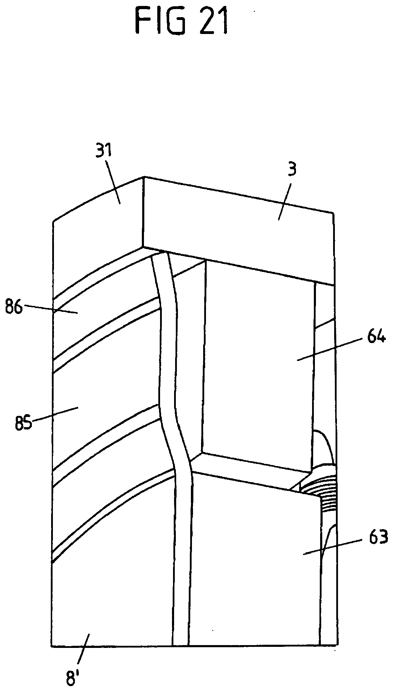

In Fig. 21 ist in vergrößerter perspektivischer Detailansicht die Verkrallung des Verkrallungsrandes 86 der axial federnden Abdeckscheibe 8' mit dem Innenrand eines der Segmentarme 31 bis 34 dargestellt. Das Maß der Verkrallung bzw. die Verkrallungsgeometrie kann je nach notwendiger Andrückkraft mit unterschiedlichen Anstellwinkeln oder Überdeckungsgraden gegenüber dem Innenrand der Segmentarme 31 bis 34 erfolgen.

Durch diese Form der Verbindung der axial federnden Abdeckscheibe 8' mit dem Gehäusedeckel 3 entfallen Verbindungselemente wie Schrauben oder Nieten oder spezielle Verbindungsverfahren wie Schweißen, Kleben oder dergleichen.

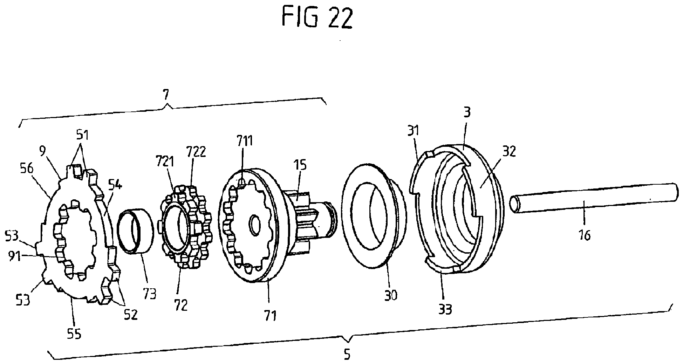

In den Fig. 22 bis 25 ist ein alternatives Taumelgetriebe als zweite Untersetzungsgetriebestufe dargestellt, die ebenfalls in die Vorbaugruppe 5 integriert ist.

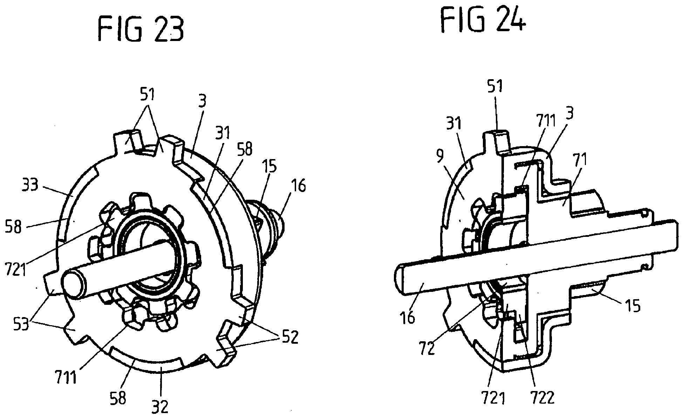

Das in Fig. 22 in einer perspektivischen Explosionsdarstellung, in Fig. 23 im zusammengebauten Zustand und in Fig. 18 in einem perspektivischen Längsschnitt als Teil einer Vorbaugruppe 5 dargestellte alternative Taumelradgetriebe 7 weist ein mit zwei Außenverzahnungen 721, 722 mit unterschiedlichem Durchmesser versehenes Taumelrad 72 auf, in dessen Bohrung eine Laufbuchse 73 eingesetzt ist, in die der Exzenter 43 gemäß Fig. 2 eingreift.

Die erste Außenverzahnung 721 des Taumelrades 72 weist einen geringeren Kopfkreisdurchmesser auf als die zweite Außenverzahnung 722 und kämmt mit der Innenverzahnung 91 einer kombinierten Abdeck- und Führungsscheibe 9, die entsprechend der Führungsscheibe 64 paarweise am Umfang verteilt angeordnete Formschlusszähne 51, 52, 53, die in die Formschlussvertiefungen 24, 25, 26 am Rand der zweiten Ausnehmung 28 der Gehäuseschale 2 eingreifen, und drei Segmentausnehmungen 54, 55, 56 aufweist, in die in diesem Ausführungsbeispiel drei Segmentarme 31 bis 33 des Gehäusedeckels 3 eingreifen, in den eine Laufbuchse 30 eingesetzt ist. Die kombinierte Abdeck- und Führungsscheibe 9 dient somit sowohl als Abdeckscheibe der Vorbaugruppe 5, die in Verbindung mit dem Gehäusedeckel 3 die Getriebeelemente des Taumelradgetriebes 7 axial sichert und die Vorbaugruppe 5 mit der Gehäuseschale 2 formschlüssig verbindet, als auch zur Führung des Taumelrades 72, so dass dieses eine Taumelbewegung ohne Eigenrotation durchführt.

Das Taumelrad 72 kämmt mit seiner ersten Außenverzahnung 721 mit der Innenverzahnung 91 der kombinierten Abdeck- und Führungsscheibe 9, wobei sich die Anzahl der Zähne der ersten Außenverzahnung 721 des Taumelrades 72 von der Innenverzahnung 91 der kombinierten Abdeck- und Führungsscheibe 9 um wenigstens einen Zahn unterscheidet und der Außendurchmesser des Taumelrades 72, d. h. der Kopfkreisdurchmesser der ersten Außenverzahnung 721, um wenigstens eine Zahnhöhe geringer ist als der Innendurchmesser der kombinierten Abdeck- und Führungsscheibe 9, d. h. der Fußkreisdurchmesser der Innenverzahnung 91 der kombinierten Abdeck- und Führungsscheibe 9.

Die axial zur ersten Außenverzahnung 721 versetzte zweite Außenverzahnung 722 des Taumelrades 72 kämmt mit der Innenverzahnung 711 eines Abtriebsrades 71, das mit einem Ritzel 15 verbunden ist, das in analoger Weise zum vorstehend beschriebenen Ausführungsbeispiel mit einem entsprechenden Abtriebselement der Verstelleinrichtung, beispielsweise einer Sitzhöhenverstellung, einer Sitztiefenverstellung, Lordoseverstellung, Lehnenneigungsverstellung oder Sitzlängsverstellung, in Eingriff steht.

Die Anzahl der Zähne der zweiten Außenverzahnung 722 des Taumelrades 72 und der Innenverzahnung 711 des Abtriebsrades 71 unterscheidet sich ebenfalls um wenigstens einen Zahn, d. h., der Kopfkreisdurchmesser der zweiten Außenverzahnung 722 des Taumelrades 72 ist um wenigstens eine Zahnhöhe geringer als der Fußkreisdurchmesser der Innenverzahnung 711 des Abtriebsrades 71.

Das Verhältnis der Zähnezahlen der Innenverzahnung 91 der kombinierten Abdeck- und Führungsscheibe 9 zur ersten Außenverzahnung 721 des Taumelrades 72 unterscheidet sich von dem Verhältnis der Zähnezahlen der Innenverzahnung 711 des Abtriebsrades 71 zur zweiten Außenverzahnung 722 des Taumelrades 72, was eine Untersetzung der vom Schraubrad 42 des Schneckengetriebes 4 über den Exzenter 43 auf das Taumelrad 72 übertragenen Drehung zur Folge hat, wobei sich das Taumelrad 72 an der feststehenden Innenverzahnung 91 der kombinierten Abdeck- und Führungsscheibe 9 ohne Eigenrotation abwälzt. Die durch die Abwälzung des Taumelrades 72 bedingte Taumelbewegung ohne Eigenrotation wird auf das Abtriebsrad 71 übertragen.

Wesentlich hierbei ist, dass die Verhältnisse der Zähnezahlen der Innenverzahnung 91 der Abdeck- und Führungsscheibe 9 zur ersten Außenverzahnung 721 des Taumelrades 72 und der Zähnezahlen der Innenverzahnung 711 des Abtriebsrades 71 zur zweiten Außenverzahnung 722 des Taumelrades 72 voneinander abweichen.

Wie dem perspektivischen Längsschnitt durch die Vorbaugruppe 5 mit dem alternativen Taumelradgetriebe 7 gemäß Fig. 24 zu entnehmen ist, stützt sich das Taumelrad 72 in axialer Richtung an der kombinierten Abdeck- und Führungsscheibe 9 ab, so dass auch bei hoher Belastung und insbesondere im Crashfall die Zahnradpaare der ersten Außenverzahnung 721 des Taumelrades 72 mit der Innenverzahnung 91 der kombinierten Abdeck- und Führungsscheibe 9 und der zweiten Außenverzahnung 722 des Taumelrades 72 mit der Innenverzahnung 711 des Abtriebsrades 71 vollständig in Eingriff bleiben.

Die in Fig. 23 in zusammengebautem Zustand dargestellte Vorbaugruppe 5 wird analog zu dem in Fig. 9 dargestellten Ausführungsbeispiel mittels Laserschweißen als bauliche Einheit fixiert. Auch bei diesem Ausführungsbeispiel können alternative Verbindungsarten zwischen dem Gehäusedeckel 3 und der kombinierten Abdeck- und Führungsscheibe 9 entsprechend den Fig. 13 bis 15 vorgesehen werden.

Mittels der paarweise am Umfang der kombinierten Abdeck- und Führungsscheibe 9 vorgesehenen Formschlusszähne 51, 52, 53, die in die am Rand der zweiten Ausnehmung 28 der Gehäuseschale 2 angeordneten Formschlussvertiefungen 24, 25, 26 eingreifen, wird eine formschlüssige Verbindung zwischen der Vorbaugruppe 5 und der Gehäuseschale 2 hergestellt. Dabei greift die Welle 16 der Vorbaugruppe 5 in die Öffnung 20 der Gehäuseschale 2 ein und ist somit in dieser und in der Öffnung 610 des Abtriebsrades 61 gelagert.

Beim Aufstecken der kombinierten Abdeck- und Führungsscheibe 9 auf die Welle 16 greifen die am Umfang des Randes des Gehäusedeckels 3 regelmäßig verteilt angeordnete Segmentarme 31 bis 33 in die korrespondierenden, am Umfang der kombinierten Abdeck- und Führungsscheibe 9 ausgebildeten Segmentausnehmungen 54, 55, 56 ein und sichern damit die Lage der kombinierten Abdeck- und Führungsscheibe 9 in radialer Richtung.

Nach dem Zusammenbau der Vorbaugruppe 5 erfolgt eine Fixierung der Vorbaugruppe 5 mittels zwischen den Segmentarmen 31 bis 33 des Gehäusedeckels 3 und dem Außenrand der kombinierten Abdeck- und Führungsscheibe 9 angebrachten Schweißnähten 58, die vorzugsweise durch Laserschweißung hergestellt werden.

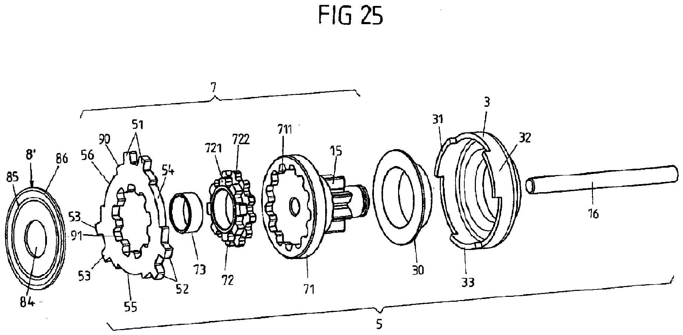

Fig. 25 zeigt in einer perspektivischen Explosionsdarstellung analog zur Explosionsdarstellung gemäß Fig. 22 das in die Vorbaugruppe 5 integrierte alternative Taumelgetriebe als zweite Untersetzungsgetriebestufe, bei dem die kombinierte Abdeck- und Führungsscheibe 9 durch eine ausschließlich Führungsfunktionen erfüllende Führungsscheibe 90 und eine axial federnde Abdeckscheibe 8' analog zur Ausführungsform gemäß den Fig. 16 bis 21 ersetzt ist. Der Aufbau und die Funktion der Getriebeelemente der zweiten Untersetzungsgetriebestufe entspricht dem vorstehend beschriebenen Aufbau und der Funktion des Taumelgetriebes gemäß den Fig. 22 bis 24, so dass hierzu auf die vorstehende Beschreibung zu diesen Figuren verwiesen wird.

Beim Aufstecken der axial federnden Abdeckscheibe 8' auf die Welle 16 verkrallt sich der Verkrallungsrand 86 der axial federnden Abdeckscheibe 8' mit dem Innenrand der regelmäßig verteilt angeordneten Segmentarme 31 bis 33 des Gehäusedeckels 3 und sichert damit die axiale Lage der Getriebeelemente 71, 72, 73, 55 des alternativen Taumelgetriebes.

### Bezugszeichenliste

- 1: Antriebsmotor
- 2: Gehäuseschale
- 3: Gehäusedeckel
- 4: Schneckengetriebe
- 5: Vorbaugruppe
- 6,7: Taumelradgetriebe
- 8: Abdeckscheibe
- 8': Axial federnde Abdeckscheibe
- 9: Kombinierte Abdeck- und Führungsscheibe
- 10: Motorgehäuse
- 11: Motorwelle
- 12: Flansche
- 13: Haken
- 14: Schraube
- 15: Abtriebsritzel
- 16: Welle
- 17: Schaberippen
- 18: Hinterhakung
- 20: Bohrung
- 21, 22, 23: Flanscharme
- 24, 25, 26: Formschlussvertiefungen
- 27: erste Ausnehmung
- 28: zweite Ausnehmung
- 30: Laufbuchse
- 31 bis 34: Segmentarme
- 40: Bohrung
- 41: Antriebsschnecke
- 42: Schraubrad
- 43: Exzenter
- 51,52,53: Formschlusszähne
- 54 - 57: Segmentausnehmungen
- 58: Erste Schweißnähte
- 59: Zweite Schweißnähte
- 61: Abtriebsrad
- 62: Taumelrad
- 63: Kreuzschieber
- 64: Führungsscheibe
- 65: Buchse
- 71: Abtriebsrad
- 72: Taumelrad
- 80: Bohrung
- 81: Umfangsrand
- 82: Flansche
- 823: Durchstellungen
- 84: Öffnung
- 85: Federprofil
- 86: Verkrallungsrand
- 90: Führungsscheibe
- 91: Innenverzahnung
- 610: Öffnung
- 611: Innenverzahnung
- 621: Außenverzahnung
- 622, 623: Führungsnasen
- 624: umlaufender Steg
- 625, 626: Abstandshalter
- 630: Öffnung
- 632, 633: Führungsschlitze
- 634, 635: Führungszapfen
- 640: Öffnung
- 645, 646: Führungsschlitze
- 711: Innenverzahnung
- 721: erste Außenverzahnung
- 722: zweite Außenverzahnung
- R: Radiusübergang

## Patentansprüche

1. Verstellantrieb für eine Verstelleinrichtung eines Kraftfahrzeugsitzes mit einem Antriebsmotor (1), einem zweistufigen Untersetzungsgetriebe (4; 6, 7) und einem Gehäuse (2, 3) zur Lagerung des Antriebsmotors (1) und zur Aufnahme des zweistufigen Untersetzungsgetriebes (4; 6, 7), wobei Getriebeelemente (41, 42) einer ersten Untersetzungsgetriebestufe (4) in einer Gehäuseschale (2) des Gehäuses (2, 3) angeordnet sind, die durch einen Gehäusedeckel (3) verschließbar ist,
**gekennzeichnet durch**
ein mit einem zweiten Getriebeelement (42) der ersten Untersetzungsgetriebestufe (4) verbundenes Koppelelement (43), das mit einem ersten Getriebeelement (62) der zweiten Untersetzungsgetriebestufe (6, 7) in Eingriff steht, wobei die zweite Untersetzungsgetriebestufe (6, 7) in einer mit der Gehäuseschale (2) verbindbaren Vorbaugruppe (5) angeordnet ist, wobei die Vorbaugruppe (5) eine geschlossene Baueinheit bildet, und wobei in der Vorbaugruppe (5) zumindest ein Teil der Getriebeelemente (61 - 64; 71, 72; 91) der zweiten Untersetzungsgetriebestufe (6, 7) zwischen dem Gehäusedeckel (3) und einer mit dem Gehäusedeckel (3) verbundenen Abdeckscheibe (8, 8'; 9) angeordnet und in axialer Richtung abgestützt ist.

2. Verstellantrieb nach Anspruch 1, **dadurch gekennzeichnet, dass** die Gehäuseschale (2)
- Flanscharme (21, 22, 23) zur Aufnahme des Antriebsmotors (1),
- eine erste Ausnehmung (27) zur Aufnahme eines mit der Motorwelle (11) des Antriebsmotors (1) verbundenen ersten Getriebeelementes (41) der ersten Untersetzungsgetriebestufe (4) und
- eine zweite Ausnehmung (28) zur Aufnahme des zweiten Getriebeelements (42) der ersten Untersetzungsgetriebestufe (4) und des Koppelelements (43)
aufweist.

3. Verstellantrieb nach Anspruch 2, **dadurch gekennzeichnet, dass** die zweite Ausnehmung (28) topfförmig ausgebildet ist und die Vorbaugruppe (5) eine im Wesentlichen zylinderförmige Außenkontur aufweist, deren Außendurchmesser dem Innendurchmesser der zweiten Ausnehmung (28) angepasst ist und dass die Vorbaugruppe (5) bündig in die zweite Ausnehmung (28) einsetzbar ist.

4. Verstellantrieb nach mindestens einem der vorangehenden Ansprüche, **dadurch gekennzeichnet, dass** die in die zweite Ausnehmung (28) eingesetzte Vorbaugruppe (5) in axialer Richtung an der Gehäuseschale (2) festlegbar ist.

5. Verstellantrieb nach Anspruch 3, **dadurch gekennzeichnet, dass** die Vorbaugruppe (5) zur Verdrehsicherung mit radialem Formschluss und/oder Reibschluss in die zweite Ausnehmung (28) einsetzbar bzw. mit der Gehäuseschale (2) verbindbar ist.

6. Verstellantrieb nach mindestens einem der vorangehenden Ansprüche, **dadurch gekennzeichnet, dass** die erste Untersetzungsgetriebestufe aus einem selbsthemmenden Schneckengetriebe (4) mit einer mit der Motorwelle (11) des Antriebsmotors (1) verbundenen Antriebsschnecke (41) und einem mit der Verzahnung der Antriebsschnecke (41) in Eingriff stehenden Schraubrad (42) besteht.

7. Verstellantrieb nach mindestens einem der vorangehenden Ansprüche, **dadurch gekennzeichnet, dass** der Gehäusedeckel (3) glockenförmig ausgebildet ist, eine Öffnung zur Aufnahme einer Laufbuchse (30) zur axialen Führung der in die Vorbaugruppe integrierten Getriebeelemente der zweiten Untersetzungsgetriebestufe (6, 7) und zur Lagerung eines abtriebsseitigen Ritzels (15) zur Übertragung des Abtriebsmoments auf eine Verzahnungseinrichtung der Verstelleinrichtung und einen mit der Abdeckscheibe (8, 8'; 9) verbunden Rand aufweist.

8. Verstellantrieb nach mindestens einem der vorangehenden Ansprüche, **dadurch gekennzeichnet, dass** die Vorbaugruppe (5) Getriebeelemente eines Taumelradgetriebes (6, 7) aufweist mit
- einem konzentrisch auf einer Welle (16) gelagerten Abtriebsrad (61, 71) mit einer Innenverzahnung (611, 671),
- dem mit dem Abtriebsrad (61, 71) verbundenen Ritzel (15),
- einem Taumelrad (62, 72), dessen Außenverzahnung (621) mit der Innenverzahnung (611, 671) des Abtriebsrades (61, 71) zusammenwirkt und
- einer Führungseinrichtung (63, 64; 9) für das Taumelrad (62, 72), die aus
- einem Kreuzschieber (63), der mit zueinander fluchtenden ersten Führungselementen (632, 633) in zueinander fluchtende erste Gegen-Führungselemente (622, 623) des Taumelrades (62) eingreift, und
- einer Führungsscheibe (64) besteht, die mit zueinander fluchtenden, um 90° gegen die ersten Führungselemente (632, 633) des Kreuzschiebers (63) versetzten zweiten Führungselementen (645, 646) in zueinander fluchtende, um 90° gegen die ersten Führungselemente (632, 633) des Kreuzschiebers (63) versetzten zweiten Gegen-Führungselemente (634, 635) des Kreuzschiebers (63) eingreift.

9. Verstellantrieb nach Anspruch 8, **dadurch gekennzeichnet, dass** das Taumelrad (62) auf seiner dem Kreuzschieber (63) zugewandten Stirnseite als Vorsprünge ausgebildete Abstandshalter (625, 626) aufweist, die den Abstand der einander zugewandten Stirnflächen des Kreuzschiebers (63) und Taumelrades (62) festlegen.

10. Verstellantrieb nach mindestens einem der vorangehenden Ansprüche, **gekennzeichnet durch** eine axial federnde Abdeckscheibe (8'), die kraft- oder formschlüssig mit der Führungsscheibe (64) oder dem Gehäusedeckel (3), insbesondere mittels am Umfang der Abdeckscheibe (8) versetzt zueinander angeordneter Schweißnähte (59) verbunden ist

11. Verstellantrieb nach Anspruch 1, **dadurch gekennzeichnet, dass** vom Umfangsrand (81) der Abdeckscheibe (8) oder der axial federnden Abdeckscheibe (8') radial abstehende Flansche (82) mit am Umfang des Gehäusedeckels (3) ausgebildeten Segmentarmen (31 - 34) mittels Schraubverbindungen (14) oder in Durchstellungen (823) der Flansche (82) angebrachte, als Radialnieten ausgebildete Nietverbindungen verbunden sind.

12. Verstellantrieb nach mindestens einem der vorangehenden Ansprüche, **dadurch gekennzeichnet, dass** der Umfangsrand (81) der Abdeckscheibe (8) oder der axial federnden Abdeckscheibe (8') abschnittsweise mit vom Rand des Gehäusedeckels (3) abstehenden Haken (13) verclipst ist.

13. Verstellantrieb nach Anspruch 8, **dadurch gekennzeichnet, dass** der Kreuzschieber (63) aus einer Platte mit einer zentrischen Bohrung (630), die in miteinander fluchtende, horizontal ausgerichtete Führungsschlitze (632, 633) übergeht, in die horizontal ausgerichtete, zueinander fluchtende Führungsnasen (622, 623) des Taumelrads (62) eingreifen, und um 90° zu den horizontalen Führungsschlitzen (632, 633) vertikal ausgerichteten, vom Umfang des Kreuzschiebers (63) abstehenden Führungszapfen (634, 635) besteht, die in vertikal ausgerichtete, zueinander fluchtende, von einer zentralen Bohrung (640) der Führungsscheibe (64) ausgehende Führungsausnehmungen (645, 646) der Führungsscheibe (64) eingreifen, wobei die Führungsnasen (622, 623) des Taumelrades (62) an horizontalen Gleitflächen (634 - 637) der Führungsschlitze (632, 633) gleitende Führungsflächen (625 - 628) aufweisen, wobei die Führungsschlitze (632, 633) und die Führungsnasen (622, 623) eine solche Länge aufweisen, dass die Führungsnasen (622, 623) mit geringem Abstand vor dem Fußkreisdurchmesser der Außenverzahnung (621) des Taumelrades (62) enden und wobei die horizontalen Gleitflächen (634 - 637) der Führungsschlitze (632, 633) und die Führungsflächen (625 - 628) eine axiale Länge aufweisen, die gleich der axialen Länge oder Dicke des Kreuzschiebers (63) ist und die Führungsnasen (622, 623) des Taumelrades (62) über einen an der Peripherie der Bohrung (620) des Taumelrades (62) umlaufenden Steg (624) miteinander verbunden sind.

14. Verstellantrieb nach einem der vorangehenden Ansprüche 1 bis 5, **dadurch gekennzeichnet, dass** die Vorbaugruppe (5)
- ein konzentrisch auf einer Welle (16) gelagertes Abtriebsrad (71) mit einer Innenverzahnung (711),
- ein mit dem Abtriebsrad (71) verbundenes Ritzel (15) zur Übertragung des Antriebsmoments auf eine Verzahnung der Verstelleinrichtung,
- ein Taumelrad (72) mit einer ersten Außenverzahnung (721), die mit der Innenverzahnung (711) des Abtriebsrades (71) zusammenwirkt, wobei sich die Anzahl der Zähne der ersten Außenverzahnung (721) des Taumelrades (72) und der Innenverzahnung (711) des Abtriebsrades (71) um wenigstens einen Zahn unterscheidet und der Kopfkreisdurchmesser der ersten Außenverzahnung (721) des Taumelrades (72) um wenigstens eine Zahnhöhe geringer ist als der Fußkreisdurchmesser der Innenverzahnung (711) des Abtriebsrades (71), und mit einer zweiten Außenverzahnung (722) mit gegenüber der ersten Außenverzahnung (721) kleinerem Kopfkreisdurchmesser,
- den glockenförmigen Gehäusedeckel (3) mit einer Öffnung zur Aufnahme einer Laufbuchse (30) zur axialen Führung der in die Vorbaugruppe (5) integrierten Getriebeelemente des Taumelgetriebes (7) und zur Lagerung des Ritzels (15),
- eine Führungsscheibe (90) mit einer Innenverzahnung (91), in die die zweite Außenverzahnung (722) des Taumelrades (72) eingreift, wobei sich die Anzahl der Zähne der zweiten Außenverzahnung (722) des Taumelrades (72) und der Innenverzahnung (91) der Abdeck- und Führungsscheibe (9) um wenigstens einen Zahn unterscheidet und der Kopfkreisdurchmesser der zweiten Außenverzahnung (722) des Taumelrades (72) um wenigstens eine Zahnhöhe geringer ist als der Fußkreisdurchmesser der Innenverzahnung (91) der Führungsscheibe (90) und
- die mit dem der Öffnung des Gehäusedeckels (3) entgegen gesetzten Rand verbundene Abdeckscheibe (8) oder axial federnde Abdeckscheibe (8') zur axialen Abstützung der in die Vorbaugruppe (5) integrierten Getriebeelemente aufweist.

15. Verstellantrieb nach einem der vorangehenden Ansprüche 1 bis 5, **dadurch gekennzeichnet, dass** die Vorbaugruppe (5)
- ein konzentrisch auf einer Welle (16) gelagertes Abtriebsrad (71) mit einer Innenverzahnung (711),
- ein mit dem Abtriebsrad (71) verbundenes Ritzel (15) zur Übertragung des Antriebsmoments auf eine Verzahnung der Verstelleinrichtung,
- ein Taumelrad (72) mit einer ersten Außenverzahnung (721), die mit der Innenverzahnung (711) des Abtriebsrades (71) zusammenwirkt, wobei sich die Anzahl der Zähne der ersten Außenverzahnung (721) des Taumelrades (72) und der Innenverzahnung (711) des Abtriebsrades (71) um wenigstens einen Zahn unterscheidet und der Kopfkreisdurchmesser der ersten Außenverzahnung (721) des Taumelrades (72) um wenigstens eine Zahnhöhe geringer ist als der Fußkreisdurchmesser der Innenverzahnung (711) des Abtriebsrades (71), und mit einer zweiten Außenverzahnung (722) mit gegenüber der ersten Außenverzahnung (721) kleinerem Kopfkreisdurchmesser,
- den glockenförmigen Gehäusedeckel (3) mit einer Öffnung zur Aufnahme einer Laufbuchse (30) zur axialen Führung der in die Vorbaugruppe (5) integrierten Getriebeelemente des Taumelgetriebes (7) und zur Lagerung des Ritzels (15) und
- eine mit dem der Öffnung des Gehäusedeckels (3) entgegen gesetzten Rand verbundene kombinierte Abdeck- und Führungsscheibe (9) zur axialen Abstützung der in die Vorbaugruppe (5) integrierten Getriebeelemente, die eine Innenverzahnung (91) aufweist, in die die zweite Außenverzahnung (722) des Taumelrades (72) eingreift, wobei sich die Anzahl der Zähne der zweiten Außenverzahnung (722) des Taumelrades (72) und der Innenverzahnung (91) der kombinierten Abdeck- und Führungsscheibe (9) um wenigstens einen Zahn unterscheidet und der Kopfkreisdurchmesser der zweiten Außenverzahnung (722) des Taumelrades (72) um wenigstens eine Zahnhöhe geringer ist als der Fußkreisdurchmesser der Innenverzahnung (91) der kombinierten Abdeck- und Führungsscheibe (9).

16. Verstellantrieb nach Anspruch 14 oder 15, **dadurch gekennzeichnet, dass** der Kopfkreisdurchmesser der ersten Außenverzahnung (721) des Taumelrades (72) und der Fußkreisdurchmesser der Innenverzahnung (91) der Führungsscheibe (90) oder der kombinierten Abdeck- und Führungsscheibe (9) derart bemessen sind, dass sich das Taumelrad (72) in axialer Richtung an der Führungsscheibe (90) oder der kombinierten Abdeck- und Führungsscheibe (9) abstützt.

17. Verstellantrieb nach mindestens einem der vorangehenden Ansprüche, **dadurch gekennzeichnet, dass** die Führungsscheibe (64) oder die kombinierte Abdeck- und Führungsscheibe (9) periphere Formschlusszähne (51, 52, 53) aufweist, die in Formschlussvertiefungen (24, 25, 26) der Gehäuseschale (2) eingreifen und insbesondere unsymmetrisch am Umfang der Führungsscheibe (64) oder der kombinierten Abdeck- und Führungsscheibe (9) verteilt angeordnet sind.

18. Verstellantrieb nach Anspruch 17, **dadurch gekennzeichnet, dass** die Formschlusszähne (51, 52, 53) der Führungsscheibe (64) oder der kombinierten Abdeck- und Führungsscheibe (9) paarweise im rechten Winkel zueinander vom Umfang der Führungsscheibe (64) oder der kombinierten Abdeck- und Führungsscheibe (9) abstehen und formschlüssig in die Formschlussvertiefungen (24, 25, 26) am Rand der zweiten Ausnehmung (28) der Gehäuseschale (2) eingreifen.

19. Verstellantrieb nach mindestens einem der vorangehenden Ansprüche, **dadurch gekennzeichnet, dass** der Gehäusedeckel (3) von seinem mit der Führungsscheibe (64) oder der kombinierten Abdeck- und Führungsscheibe (9) verbundenen Rand abstehende Segmentarme (31 - 34) aufweist, die formschlüssig in Segmentausnehmungen (54 - 57) der Führungsscheibe (64) oder der kombinierten Abdeck- und Führungsscheibe (9) eingreifen.

## Claims

1. An adjustment drive for an adjusting device of a motor vehicle seat with a drive motor (1), a two-stage reduction gear (4; 6, 7) and a housing (2, 3) for mounting the drive motor (1) and for accommodating the two-stage reduction gear (4; 6, 7), wherein gear elements (41, 42) of a first reduction gear stage (4) are arranged In a housing shell (2) of the housing (2, 3), which can be closed by a housing cover (3),
**characterized by**
a coupling element (43) which is connected with the second gear element (42) of the first reduction gear stage (4) and which is in engagement with a first gear element (62) of the second reduction gear stage (6, 7), wherein the second reduction gear stage (6, 7) is arranged in a pre-assembly unit (5) connectable with the housing shell (2), wherein the pre-assembly unit (5) forms a closed unit, and wherein in the pre-assembly unit (5) at least a part of the gear elements (61 - 64; 71, 72; 91) of the second reduction gear stage (6, 7) is arranged between the housing cover (3) and a cover plate (8, 8'; 9) connected with the housing cover (3) and Is supported in axial direction.

2. The adjustment drive according to claim 1, **characterized in that** the housing shell (2) includes:
- flange arms (21, 22, 23) for accommodating the drive motor (1),
- a first recess (27) for accommodating a first gear element (41) of the first reduction gear stage (4) connected with the motor shaft (11) of the drive motor (1), and
- a second recess (28) for accommodating the second gear element (42) of the first reduction gear stage (4) the coupling element (43).

3. The adjustment drive according to claim 2, **characterized in that** the second recess (28) is formed pot-shaped and the pre-assembly unit (5) has a substantially cylindrical outer contour whose outside diameter is adapted to the inside diameter of the second recess (28) and that the pre-assembly unit (5) can be inserted flush into the second recess (28).

4. The adjustment drive according to at least one of the preceding claims, **characterized In that** the pre-assembly unit (5) inserted into the second recess (28) can be fixed at the housing shell (2) in axial direction.

5. The adjustment drive according to claim 3, **characterized In that** for anti-rotation protection the pre-assembly unit (5) Is Insertable into the second recess (28) or connectable with the housing shell (2) with radial form fit and/or frictional contact.

6. The adjustment drive according to at least one of the preceding claims, **characterized in that** the first reduction gear stage consists of a self-locking worm-gear transmission (4) with a drive worm (41) connected with the motor shaft (11) of the drive motor (1) and a helical gear (42) In engagement with the toothing of the drive worm (41).

7. The adjustment drive according to at least one of the preceding claims, **characterized in that** the housing cover (3) is formed bell-shaped, includes an opening for accommodating a bushing (30) for the axial guidance of the gear elements of the second reduction gear stage (6, 7) integrated Into the pre-assembly unit and for supporting an output-side pinion (15) for transmitting the output torque to a toothing means of the adjusting device and an edge connected with the cover plate (8, 8'; 9).

8. The adjustment drive according to at least one of the preceding claims, **characterized In that** the pre-assembly unit (5) includes gear elements of a wobble gear transmission (6, 7), comprising
- a driven gear (61, 71) with an internal toothing (611, 671) concentrically mounted on a shaft (16),
- the pinion (15) connected with the driven gear (61, 71),
- a wobble gear (62, 72) whose external toothing (621) cooperates with the internal toothing (611, 671) of the driven gear (61, 71), and
- a guide means (63, 64; 9) for the wobble gear (62, 72) which consists of
- a cross-head slide (63) which with first guide elements (632, 633) aligned with each other engages Into first counter-guide elements (622, 623) of the wobble gear (62) aligned with each other, and
- a guide plate (64) which with second guide elements (645, 646) aligned with each other and offset by 90° against the first guide elements (632, 633) of the cross-head slide (63) engages into second counter-guide elements (634, 635) of the cross-head slide (63) aligned with each other and offset by 90° against the first guide elements (632, 633) of the cross-head slide (63).

9. The adjustment drive according to claim 8, **characterized in that** on its end face facing the cross-head slide (63) the wobble gear (62) has spacers (625, 626) formed as protrusions, which define the distance of the end faces of the cross-head slide (63) and wobble gear (62) facing each other.

10. The adjustment drive according to at least one of the preceding claims, **characterized by** an axially resilient cover plate (8') which is positively or non-positively connected with the guide plate (64) or the housing cover (3), in particular by means of welding seams (59) arranged offset to each other at the circumference of the cover plate (8).

11. The adjustment drive according to claim 1, **characterized in that** flanges (82) radially protruding from the peripheral edge (81) of the cover plate (8) or the axially resilient cover plate (8') are connected with segment arms (31 - 34) formed on the circumference of the housing cover (3) by means of screw connections (14) or rivet connections formed as radial rivets which are mounted in insertion tabs (823) of the flanges (82).

12. The adjustment drive according to at least one of the preceding claims, **characterized in that** the peripheral edge (81) of the cover plate (8) or the axially resilient cover plate (8') partly is clipped with hooks (13) protruding from the edge of the housing cover (3).

13. The adjustment drive according to claim 8, **characterized In that** the cross-head slide (63) consists of a plate with a central bore (630) which merges Into horizontally oriented guide slots (632, 633) aligned with each other, into which the horizontally oriented guide noses (622, 623) of the wobble gear (62) engage, which are aligned with each other, and consists of guide pins (634, 635) vertically oriented by 90° relative to the horizontal guide slots (632, 633) and protruding from the circumference of the cross-head slide (63), which engage into vertically oriented guide recesses (645, 646) of the guide plate (64) aligned with each other and proceeding from a central bore (640) of the guide plate (64), wherein the guide noses (622, 623) of the wobble gear (62) have sliding guide surfaces (625 - 628) on horizontal sliding surfaces (634 - 637) of the guide slots (632, 633), wherein the guide slots (632, 633) and the guide noses (622, 623) have such a length that the guide noses (622, 623) end with a small distance before the root diameter of the external toothing (621) of the wobble gear (62) and wherein the horizontal sliding surfaces (634 - 637) of the guide slots (632, 633) and the guide surfaces (625 - 628) have an axial length which is equal to the axial length or thickness of the cross-head slide (63) and the guide noses (622, 623) of the wobble gear (62) are connected with each other via a circumferential web (624) on the periphery of the bore (620) of the wobble gear (62).

14. The adjustment drive according to any one of the preceding claims 1 to 5, **characterized In that** the pre-assembly unit (5) includes
- a driven gear (71) with an internal toothing (711) concentrically mounted on a shaft (16),
- a pinion (15) connected with the driven gear (71) for transmitting the driving torque to a toothing of the adjusting device,
- a wobble gear (72) with a first external toothing (721) which cooperates with the internal toothing (711) of the driven gear (71), wherein the number of teeth of the first external toothing (721) of the wobble gear (72) and the internal toothing (711) of the driven gear (71) differs by at least one tooth and the tip diameter of the first external toothing (721) of the wobble gear (72) is smaller than the root diameter of the internal toothing (711) of the driven gear (71) by at least one tooth height, and with a second external toothing (722) with a smaller tip diameter as compared to the first external toothing (721),
- the bell-shaped housing cover (3) with an opening for accommodating a bushing (30) for the axial guidance of the gear elements of the wobble gear transmission (7) Integrated into the pre-assembly unit (5) and for mounting the pinion (15),
- a guide plate (90) with an internal toothing (91) into which the second external toothing (722) of the wobble gear (72) engages, wherein the number of teeth of the second external toothing (722) of the wobble gear (72) and the internal toothing (91) of the cover and guide plate (9) differs by at least one tooth and the tip diameter of the second external toothing (722) of the wobble gear (72) Is smaller than the root diameter of the internal toothing (91) of the guide plate (90) by at least one tooth height, and
- the cover plate (8) or axially resilient cover plate (8') connected with the edge opposite the opening of the housing cover (3) for axially supporting the gear elements Integrated into the pre-assembly unit (5).

15. The adjustment drive according to any one of the preceding claims 1 to 5, **characterized in that** the pre-assembly unit (5) includes
- a driven gear (71) with an internal toothing (711) concentrically mounted on a shaft (16),
- a pinion (15) connected with the driven gear (71) for transmitting the driving torque to a toothing of the adjusting device,
- a wobble gear (72) with a first external toothing (721) which cooperates with the Internal toothing (711) of the driven gear (71), wherein the number of teeth of the first external toothing (721) of the wobble gear (72) and the internal toothing (711) of the driven gear (71) differs by at least one tooth and the tip diameter of the first external toothing (721) of the wobble gear (72) is smaller than the root diameter of the internal toothing (711) of the driven gear (71) by at least one tooth height, and with a second external toothing (722) with a smaller tip diameter as compared to the first external toothing (721),
- the bell-shaped housing cover (3) with an opening for accommodating a bushing (30) for the axial guidance of the gear elements of the wobble gear transmission (7) integrated into the pre-assembly unit (5) and for mounting the pinion (15), and
- a combined cover and guide plate (9) connected with the edge opposite the opening of the housing cover (3) for axially supporting the gear elements Integrated into the pre-assembly unit (5), which includes an internal toothing (91) into which the second external toothing (722) of the wobble gear (72) engages, wherein the number of teeth of the second external toothing (722) of the wobble gear (72) and the internal toothing (91) of the combined cover and guide plate (9) differs by at least one tooth and the tip diameter of the second external toothing (722) of the wobble gear (72) Is smaller than the root diameter of the internal toothing (91) of the combined cover and guide plate (9) by at least one tooth height.

16. The adjustment drive according to claim 14 or 15, **characterized In that** the tip diameter of the first external toothing (721) of the wobble gear (72) and the root diameter of the internal toothing (91) of the guide plate (90) or of the combined cover and guide plate (9) are dimensioned such that the wobble gear (72) supports on the guide plate (90) or the combined cover and guide plate (9) in axial direction.

17. The adjustment drive according to at least one of the preceding claims, **characterized In that** the guide plate (64) or the combined cover and guide plate (9) includes peripheral form-fit teeth (51, 52, 53) which engage Into form-fit depressions (24, 25, 26) of the housing shell (2) and in particular are arranged unsymmetrically distributed on the circumference of the guide plate (64) or the combined cover and guide plate (9).

18. The adjustment drive according to claim 17, **characterized In that** the form-fit teeth (51, 52, 53) of the guide plate (64) or the combined cover and guide plate (9) protrude in pairs at right angles to each other from the circumference of the guide plate (64) or the combined cover and guide plate (9) and positively engage Into the form-fit depressions (24, 25, 26) at the edge of the second recess (28) of the housing shell (2).

19. The adjustment drive according to at least one of the preceding claims, **characterized In that** the housing cover (3) includes segment arms (31 - 34) protruding from its edge connected with the guide plate (64) or the combined cover and guide plate (9), which positively engage into segment recesses (54 - 57) of the guide plate (64) or the combined cover and guide plate (9).

## Revendications

1. Entraînement d'ajustement pour un dispositif d'ajustement d'un siège de véhicule automobile comprenant un moteur d'entraînement (1), un engrenage démultiplicateur à deux étages (4 ; 6, 7) et un boîtier (2, 3) servant à supporter le moteur d'entraînement (1) et servant à recevoir l'engrenage démultiplicateur à deux étages (4 ; 6, 7), dans lequel des éléments d'engrenage (41, 42) d'un premier étage d'engrenage démultiplicateur (4) sont disposés dans une coque de boîtier (2) du boîtier (2, 3), laquelle peut être fermée par un couvercle de boîtier (3),
**caractérisé par**
un membre de couplage (43) relié à un deuxième élément d'engrenage (42) du premier étage d'engrenage démultiplicateur (4), lequel est en prise avec un premier élément d'engrenage (62) du deuxième étage d'engrenage démultiplicateur (6, 7), qui est disposé dans un prémodule (5) pouvant être relié à la coque de boîtier (2), le prémodule (5) formant une unité modulaire fermée, dans lequel au moins une partie des éléments d'engrenage (61-64 ; 71 ; 72 ; 91) du deuxième étage d'engrenage démultiplicateur (6, 7) est disposée dans le prémodule (5) entre le couvercle de boîtier (3) et un disque de recouvrement (8, 8' ; 9) relié au couvercle de boîtier (3) et est soutenu dans une direction axiale.

2. Entraînement d'ajustement selon la revendication 1, **caractérisé en ce que** la coque de boîtier (2) présente
- des bras à bride (21, 22, 23) servant à recevoir le moteur d'entraînement (1),
- un premier évidement (27) servant à recevoir un premier élément d'engrenage (41), relié à l'arbre de moteur (11) du moteur d'entraînement (1), du premier étage d'engrenage démultiplicateur (4), et
- un deuxième évidement (28) servant à recevoir le deuxième élément d'engrenage (42) du premier étage d'engrenage démultiplicateur (4) et de l'élément de couplage (43).

3. Entraînement d'ajustement selon la revendication 2, **caractérisé en ce que** le deuxième évidement (28) est réalisé de manière à présenter une forme de pot, et **en ce que** le prémodule (5) présente un contour extérieur présentant sensiblement une forme de cylindre, dont le diamètre extérieur est adapté au diamètre intérieur du deuxième évidement (28), et **en ce que** le prémodule (5) peut être inséré dans le deuxième évidement (28) en alignement avec le deuxième évidement (28).

4. Entraînement d'ajustement selon au moins l'une quelconque des revendications précédentes, **caractérisé en ce que** le prémodule (5) inséré dans le deuxième évidement (28) peut être fixé dans une direction axiale à la coque de boîtier (2).

5. Entraînement d'ajustement selon la revendication 3, **caractérisé en ce que** le prémodule (5) peut être inséré dans le deuxième évidement (28) ou peut être relié à la coque de boîtier (2) par complémentarité de forme et/ou par une liaison à friction radiale pour empêcher toute torsion.

6. Entraînement d'ajustement selon au moins l'une quelconque des revendications précédentes, **caractérisé en ce que** le premier étage d'engrenage démultiplicateur est constitué d'un engrenage à vis sans fin (4) autobloquant pourvu d'une vis sans fin d'entraînement (41) reliée à l'arbre de moteur (11) du moteur d'entraînement (1) et d'une roue à dents hélicoïdes (42) se trouvant en prise avec la denture de la vis sans fin d'entraînement (41).

7. Entraînement d'ajustement selon au moins l'une quelconque des revendications précédentes, **caractérisé en ce que** le couvercle de boîtier (3) est réalisé de manière à présenter une forme de cloche, présente une ouverture servant à recevoir une chemise (30) servant à guider de manière axiale les éléments d'engrenage, intégrés au prémodule, du deuxième étage d'engrenage démultiplicateur (6, 7) et servant à supporter un pignon (15) situé côté sortie servant à transmettre le couple de sortie sur un système à denture du système d'ajustement, et un bord relié au disque de recouvrement (8, 8' ; 9).

8. Entraînement d'ajustement selon au moins l'une quelconque des revendications précédentes, **caractérisé en ce que** le prémodule (5) présente des éléments d'engrenage d'un engrenage de roue oscillante (6, 7) pourvu
- d'une roue de sortie (61, 71) montée de manière concentrique sur un arbre (16), pourvue d'une denture intérieure (611, 671),
- du pignon (15) relié à la roue de sortie (61, 71),
- d'une roue oscillante (62, 72), dont la denture extérieure (621) coopère avec la denture intérieure (611, 671) de la roue de sortie (61, 71) et
- d'un système de guidage (63, 64 ; 9) pour la roue oscillante (62, 72), qui est constitué
-- d'un chariot à mouvements croisés (63), qui vient en prise, par des premiers éléments de guidage (632, 633) alignés les uns par rapport aux autres, avec des premiers contre-éléments de guidage (622, 623) alignés les uns par rapport aux autres de la roue oscillante (62), et
-- d'un disque de guidage (64), qui vient en prise, par des deuxièmes éléments de guidage (645, 646) alignés les uns par rapport aux autres, décalés de 90° par rapport aux premiers éléments de guidage (632, 633) du chariot à mouvements croisés (63), avec des deuxièmes contre-éléments de guidage (634, 635) alignés les uns par rapport aux autres, décalés de 90° par rapport aux premiers éléments de guidage (632, 633) du chariot à mouvements croisés (63).

9. Entraînement d'ajustement selon la revendication 8, **caractérisé en ce que** la roue oscillante (62) présente, sur son côté frontal tourné vers le chariot à mouvements croisés (63), des écarteurs (625, 626) réalisés sous la forme de parties faisant saillie, qui fixent la distance entre les surfaces frontales tournées les unes vers les autres du chariot à mouvements croisés (63) et de la roue oscillante (62).

10. Entraînement d'ajustement selon au moins l'une quelconque des revendications précédentes, **caractérisé par** un disque de recouvrement (8') sur ressorts axiaux, qui est relié, à force ou par complémentarité de forme, au disque de guidage (64) ou au couvercle de boîtier (3), en particulier au moyen de joints de soudure (59) disposés de manière décalée les uns par rapport aux autres au niveau de la circonférence du disque de recouvrement (8).

11. Entraînement d'ajustement selon la revendication 1, **caractérisé en ce que** des brides (82) dépassant de manière radiale du bord circonférentiel (81) du disque de recouvrement (8) ou du disque de recouvrement (8') sur ressorts axiaux sont reliées à des bras à segments (31 - 34) réalisés au niveau de la circonférence du couvercle de boîtier (3) au moyen de systèmes d'assemblage par vissage (14) ou de systèmes d'assemblage par rivetage installés dans des découpes (823) des brides (82), réalisés sous la forme de rivets radiaux.

12. Entraînement d'ajustement selon au moins l'une quelconque des revendications précédentes, **caractérisé en ce que** le bord circonférentiel (81) du disque de recouvrement (8) ou du disque de recouvrement (8') sur ressorts axiaux est relié par clipsage par endroits à des crochets (13) dépassant du bord du couvercle de boîtier (3),

13. Entraînement d'ajustement selon la revendication 8, **caractérisé en ce que** le chariot à mouvements croisés (63) est constitué d'une plaque pourvue d'un alésage central (630), qui se poursuit en des entailles de guidage (632, 633) alignées entre elles, orientées de manière horizontale, avec lesquelles des ergots de guidage (622, 623), orientés de manière horizontale, alignés les uns par rapport aux autres, de la roue oscillante (62) viennent en prise, et de tourillons de guidage (634, 635) orientés selon un angle de 90° de manière verticale par rapport aux entailles de guidage (632, 633) horizontales, dépassant de la circonférence du chariot à mouvements croisés (63), lesquels viennent en prise avec des évidements de guidage (645, 646), orientés de manière verticale, alignés les uns par rapport aux autres, partant d'un alésage central (640) du disque de guidage (64), du disque de guidage (64), les ergots de guidage (622, 623) de la roue oscillante (62) présentant, au niveau de surfaces coulissantes horizontales (634 - 637) des entailles de guidage (632, 633), des surfaces de guidage (625 - 628) coulissantes, les entailles de guidage (632, 633) et les ergots de guidage (622, 623) présentant une longueur telle que les ergots de guidage (622, 623) se terminent à une faible distance devant le diamètre de cercle de pied de la denture extérieure (621) de la roue oscillante (62), et les surfaces coulissantes horizontales (634 - 637) des entailles de guidage (632, 633) et les surfaces de guidage (625 - 628) présentant une longueur axiale, qui est égale à la longueur axiale ou à l'épaisseur du chariot à mouvements croisés (63) et les ergots de guidage (622, 623) de la roue oscillante (62) étant reliés entre eux par l'intermédiaire d'une entretoise (624) s'étendant tout autour au niveau de la périphérie de l'alésage (620) de la roue oscillante (62).

14. Entraînement d'ajustement selon l'une quelconque des revendications 1 à 5, **caractérisé en ce que** le prémodule (5) présente
- une roue de sortie (71) montée de manière concentrique sur un arbre (16), pourvue d'une denture intérieure (711),
- un pignon (15) relié à la roue de sortie (71) servant à transmettre le couple d'entraînement sur une denture du système d'ajustement,
- une roue oscillante (72) pourvue d'une première denture extérieure (721), qui coopère avec la denture intérieure (711) de la roue de sortie (71), le nombre des dents de la première denture extérieure (721) de la roue oscillante (72) et de la denture intérieure (711) de la roue de sortie (71) étant différent d'au moins une dent et le diamètre de cercle de tête de la première denture extérieure (721) de la roue oscillante (72) étant inférieur d'au moins une hauteur de dent au diamètre de cercle de pied de la denture intérieure (711) de la roue de sortie (71), et pourvue d'une deuxième denture extérieure (722) présentant un diamètre de cercle de tête plus petit par rapport à la première denture extérieure (721),
- le couvercle de boîtier (3) présentant une forme de cloche, pourvu d'une ouverture servant à recevoir une chemise (30) servant à guider de manière axiale les éléments d'engrenage, intégrés au prémodule (5), de l'engrenage oscillant (7) et servant à supporter le pignon (15),
- un disque de guidage (90) pourvu d'une denture intérieure (91), avec laquelle la deuxième denture extérieure (722) de la roue oscillante (72) vient en prise, le nombre des dents de la deuxième denture extérieure (722) de la roue oscillante (72) et de la denture intérieure (91) du disque de recouvrement et de guidage (9) étant différent d'au moins une dent, et le diamètre de cercle de tête de la deuxième denture extérieure (722) de la roue oscillante (72) étant inférieur d'au moins une hauteur de dent au diamètre de cercle de pied de la denture intérieure (91) du disque de guidage (90), et
- le disque de recouvrement (8) relié au bord placé à l'opposé de l'ouverture du couvercle de boîtier (3) le disque de recouvrement (8') sur ressorts axiaux servant à soutenir de manière axiale les éléments d'engrenage intégrés au prémodule (5).

15. Entraînement d'ajustement selon l'une quelconque des revendications 1 à 5, **caractérisé en ce que** le prémodule (5)
- une roue de sortie (71) montée de manière concentrique sur un arbre (16), pourvue d'une denture intérieure (711),
- un pignon (15) relié à la roue de sortie (71) servant à transmettre le couple d'entraînement sur une denture du système d'ajustement,
- une roue oscillante (72) pourvue d'une première denture extérieure (721), qui coopère avec la denture intérieure (711) de la roue de sortie (71), le nombre des dents de la première denture extérieure (721) de la roue oscillante (72) et de la denture intérieure (711) de la roue de sortie (71) étant différent d'au moins une dent et le diamètre de cercle de tête de la première denture extérieure (721) de la roue oscillante (72) étant inférieur d'au moins une hauteur de dent au diamètre de cercle de pied de la denture intérieure (711) de la roue de sortie (71), et pourvue d'une deuxième denture extérieure (722) présentant un diamètre de cercle de tête plus petit par rapport à la première denture extérieure (721),
- le couvercle de boîtier (3) présentant une forme de cloche, pourvu d'une ouverture servant à recevoir une chemise (30) servant à guider de manière axiale les éléments d'engrenage, intégrés au prémodule (5), de l'engrenage oscillant (7) et servant à supporter le pignon (15),
- un disque de recouvrement et de guidage (9) combiné relié au bord placé à l'opposé de l'ouverture de couvercle de boîtier (3) servant à soutenir de manière axiale les éléments d'engrenage intégrés au prémodule (5), lequel disque de recouvrement et de guidage présente une denture intérieure (91), avec laquelle la deuxième denture extérieure (722) de la roue oscillante (72) vient en prise, le nombre des dents de la deuxième denture extérieure (722) de la roue oscillante (72) et de la denture intérieure (91) du disque de recouvrement et de guidage (9) combiné étant différent d'au moins une dent, et le diamètre de cercle de tête de la deuxième denture extérieure (722) de la roue oscillante (72) étant inférieur d'au moins une hauteur de dent au diamètre de cercle de pied de la denture intérieure (91) du disque de recouvrement et de guidage (9) combiné.

16. Entraînement d'ajustement selon la revendication 14 ou 15, **caractérisé en ce que** le diamètre de cercle de tête de la première denture extérieure (721) de la roue oscillante (72) et le diamètre de cercle de pied de la denture intérieure (91) du disque de guidage (90) ou du disque de recouvrement et de guidage (9) combiné présentent des dimensions telles que la roue oscillante (72) prend appui dans la direction axiale au disque de guidage (90) ou au disque de recouvrement et de guidage (9) combiné.

17. Entraînement d'ajustement selon au moins l'une quelconque des revendications précédentes, **caractérisé en ce que** le disque de guidage (64) ou le disque de recouvrement et de guidage (9) combiné présente des dents à complémentarité de forme (51, 52, 53) périphériques, lesquelles viennent en prise avec des renfoncements à complémentarité de forme (24, 25, 26) de la coque de boîtier (2) et sont disposées de manière répartie en particulier de manière asymétrique au niveau de la circonférence du disque de guidage (64) ou du disque de recouvrement et de guidage (9) combiné.

18. Entraînement d'ajustement selon la revendication 17, **caractérisé en ce que** les dents à complémentarité de forme (51, 52, 53) du disque de guidage (64) ou du disque de recouvrement et de guidage (9) combiné dépassent par paires selon l'angle droit les unes par rapport aux autres de la circonférence du disque de guidage (64) ou du disque de recouvrement et de guidage (9) combiné et viennent en prise par complémentarité de forme avec les renfoncements à complémentarité de forme (24, 25, 26) au niveau du bord du deuxième évidement (28) de la coque de boîtier (2).

19. Entraînement d'ajustement selon au moins l'une quelconque des revendications précédentes, **caractérisé en ce que** le couvercle de boîtier (3) présente des bras à segments (31 - 34) dépassant de son bord relié au disque de guidage (64) ou au disque de recouvrement et de guidage (9) combiné, lesquels viennent en prise par complémentarité de forme avec des évidements de segment (54 - 57) du disque de guidage (64) ou du disque de recouvrement et de guidage (9) combiné.
